# EUROPÄISCHE PATENTSCHRIFT

(11) **EP 3 545 379 B1**
(45) Veröffentlichungstag und Bekanntmachung des Hinweises auf die Patenterteilung: **26.08.2020**
(21) Anmeldenummer: 17778195.2
(22) Anmeldetag: 14.09.2017
(51) Int. Cl.: G05D 1/02

(54) **BODENBEHANDLUNGSMASCHINE UND VERFAHREN ZUM BEHANDELN VON BODENFLÄCHEN**
FLOOR TREATMENT MACHINE AND METHOD FOR TREATING FLOOR SURFACES
MACHINE DE TRAITEMENT DE SOL ET PROCÉDÉ DE TRAITEMENT DE SURFACES DE SOL

(30) Priorität: 23.11.2016 CH 15482016
(43) Veröffentlichungstag der Anmeldung: 02.10.2019
(73) Patentinhaber: Cleanfix Reinigungssysteme AG, 9247 Henau (CH)
(72) Erfinder: LAMON, Pierre, 1066 Epalinges (CH); FLÜCK, Roland, 8374 Oberwangen (CH)
(74) Vertreter: Kaminski Harmann Patentanwälte AG (Schweiz)
(86) Internationale Anmeldenummer: PCT/EP2017/073097
(87) Internationale Veröffentlichungsnummer: WO 2018/095605

(56) Entgegenhaltungen:
- EP-A1- 2 752 726
- EP-A2- 2 450 762
- US-A1- 2013 041 526

## Beschreibung

Die Erfindung bezieht sich auf eine automatische Bodenbehandlungsmaschine nach dem Oberbegriff des Anspruches 1 und ein Verfahren zum Behandeln von Bodenflächen nach dem Oberbegriff des Anspruchs 10 sowie ein Computerprogrammprodukt, welches die Durchführung eines Verfahrens nach dem Oberbegriff des Anspruchs 14 auf einer programmgesteuerten Bodenbehandlungsmaschine veranlasst.

Die vorliegende Erfindung betrifft insbesondere Maschinen und Verfahren zum Behandeln von Böden, deren behandelbare Bodenfläche durch feste Elemente, wie die Bodenfläche berandende Wandabschnitte, Türen, Gänge oder auf der Bodenfläche angeordnete Elemente wie Säulen, innere Wandabschnitte oder feste Regale, und gegebenenfalls durch verstellbare Elemente eingeschränkt ist.

Aus dem Stande der Technik sind viele Lösungen bekannt bei denen automatische Bodenreinigungsmaschinen selbständig Reinigungsverfahren auf Gebäudeböden durchführen. Dabei gibt es zwei charakteristisch verschiedene Ansätze. Beim ersten Ansatz wird die Bodenfläche nach einem Zufallsprinzip überfahren, beispielsweise indem beim Auftreffen auf ein Hindernis ein zufälliger Richtungswechsel gewählt wird. Weil keine Karte des zu reinigenden Raumes und kein Plan für einen zweckmässigen Reinigungsweg erstellt wird, ist der Speicherbedarf zwar klein, dafür ist aber der Aufwand für die Bearbeitungsbewegung sehr gross. Es werden viele Bereiche mehrmals überfahren und für eine möglichst vollständige Reinigung muss eine lange Reinigungszeit vorgesehen werden. Für eine professionelle Reinigung ist dieses Verfahren nicht geeignet.

Beim zweiten Ansatz wird die Bodenfläche möglichst genau kartiert und ein zweckmässiger Fahrweg bestimmt. Die Planung des Fahrwegs ist mit viel Rechenaufwand verbunden oder muss von Bedienungspersonal mit einem zeitaufwändigen Lernvorgang festgelegt werden. Beim Reinigen muss das Abfahren des geplanten Weges kontrolliert werden. Zudem muss eine Lösung für das Umfahren von Hindernissen und das anschliessende Auffinden des geplanten Weges vorgesehen werden. Diese Lösungen verwenden zum Speichern der Raumkarte, zum Planen des Reinigungsweges und zum Speichern der gereinigten Bereiche Gitternetze. Weil die Auflösung des Gitters möglichst klein sein muss, müssen entsprechend grosse Datenmengen gespeichert und bearbeitet werden. Die für das Umfahren von Hindernissen nötigen Vorgaben sind umfangreich und können meist nicht alle möglichen Situationen befriedigend lösen.

US 5279672 beschreibt einen Reinigungsroboter, der ein Gehäuse, zwei Antriebsräder, zwei Stützräder, an der vorderen Seite drehbare Reinigungsbürsten mit Reinigungsflüssigkeitszuführung, an der Rückseite eine Absaugeinrichtung zum Absaugen der verschmutzten Reinigungsflüssigkeit umfasst. Um die Bewegung des Reinigungsroboters zu steuern ist eine Steuereinrichtung mit Sensoren eingesetzt. Auf der Oberseite des Reinigungsroboters ist ein Infrarot-Laser-Scanner angeordnet, welcher Barcode-Informationen von an den Raumberandungen angeordneten, reflektierenden Targets liest. Die reflektierenden Targets ermöglichen es dem Reinigungsroboter mit einer Triangulation seine Position und den aktuellen Reinigungsbereich zu bestimmen. Für eine genaue Positionsbestimmung muss der Laser-Scanner die Winkellage von mindestens 3 verschiedenen Targets gleichzeitig erfassen. Ohne das Erkennen von drei Targets fährt der Roboter noch eine vorgegebenen Distanz weiter und wenn er dann immer noch nicht drei Targets gleichzeitig erfasst hat, so stellt er den Reinigungsbetrieb ein und sendet ein Alarmsignal aus. Wenn er seine Position und den Reinigungsbereich erfassen kann, so muss er einem vorgängig programmierten Reinigungsplan folgen, wobei er beim Anfahren eines verstellbaren Hindernisses bzw. Elementes versucht dieses zu umfahren. Diese Lösung hat den Nachteil, dass die Targets mit ihrem Barcode zuerst montiert werden müssen und zudem für jeden Raum ein Reinigungsplan programmiert werden muss. Wenn mobile Elemente vor Targets gestellt sind, so kann der Reinigungsroboter nicht mehr automatisch reinigen.

EP 1 903 413 A2 beschreibt das Erstellen einer Karte, wobei in einem Gitternetz besetzte Punkte eingetragen werden und die Dicke der Hindernisse und der Wand entsprechend der Ausdehnung des Roboters erhöht werden, so dass der Roboter als Punkt ohne Ausdehnung auf der Karte bewegt werden kann. Eine Karte auf der die Raumberandungen als besetzte Gitterpunkte eingetragen sind, hat immer eine Ungenauigkeit entsprechend der Zellengrösse des Gitters und führt zu grossen Datenmengen, weil das Gitternetz genügend fein sein muss, damit die Berandung genügend genau eingetragen werden kann. Ein weiterer Nachteil der beschriebenen Lösung besteht darin, dass von der Steuerung des Roboters durch eine aufwändige Ermittlung der häufigsten Linien durch den zu behandelnden Bereich eine Reinigungsrichtung bestimmt und ein definierter Fahrweg entsprechend der vorgegebenen Reinigungsrichtung gefahren werden muss. Wenn Hindernisse im zu behandelnden Bereich liegen, wird dieser in Teilbereiche aufgeteilt. Wenn Ränder des freien Bereichs von geraden Linien abweichen, entstehen viele Teilbereiche, die reduziert und/oder mit anderen Teilbereichen verbunden werden müssen. Um diese Schritte durchzuführen muss die Steuerung grosse Datenmengen speichern und aufwändige Berechnungen durchführen.

US 8060254 B2 beschreibt Distanzmessungen zur Raumbegrenzung um Gitterpunkte zu erhalten. Aus den Gitterpunkten der Berandung werden Merkmalspunkte extrahiert. Mit einem Simultaneous Localization And Map building Algorithmus (SLAM) werden Positionsschätzung und Merkmalspunkte aktualisiert. Aus der häufigsten Richtung der Berandung wird eine Fegrichtung bestimmt und gemäss der Fegrichtung wird das Gitternetz gelegt. Eine Karte auf der die Raumberandungen als besetzte Gitterpunkte eingetragen sind, hat immer eine Ungenauigkeit entsprechend der Zellengrösse des Gitters und führt zu unerwünscht grossen Datenmengen. Ein weiterer Nachteil der beschriebenen Lösung besteht darin, dass aus der Berandung bzw. aus kritischen Punkten der Karte Zonen und Reinigungsrichtungen berechnet werden müssen, was mit einem hohen Rechenaufwand verbunden ist. Nach weiteren Berechnungen müssen gegebenenfalls auch Zellen wieder zusammengefügt werden.

EP 1 557 730 A1 beschreibt eine Lösung bei der das Bearbeitungsgerät mittels einer Fahrt entlang der Aussenkontur des Raumes eine Gitterkarte des Raumes erstellt und den Raum in eine Vielzahl von Teilsegmenten unterteilt, die dann je mit einem vorgegebenen Fahrtrichtungsverlauf, beispielsweise spiralförmig, nacheinander bearbeitet werden. Nach der Bearbeitung eines Teilsegments ist die ermittelte Position mit einem nicht unbeträchtlichen Fehler verbunden. Deshalb führt das Bearbeitungsgerät zuerst eine Wandverfolgungsfahrt durch, um aus der Abfolge der Richtungsänderungen seine absolute Lage zu bestimmen und ein noch nicht bearbeitetes Teilsegment anzufahren. Die zwischen den Bearbeitungen der Teilzonen durchgeführten Wandverfolgungsfahrten sind mit viel Aufwand verbunden, ohne dass dabei die gewünschte Bearbeitung fortschreitet.

US 5 696 675 beschreibt zu einem Roboter-Staubsauger ein Roboter-Kontrollsystem das einen Raum in Bereiche mit drei verschiedenen Eigenschaften unterteilt, nämlich zugänglich für eine Saugdüse, zugänglich für den Staubsauber und nicht zugänglich. Das Kontrollsystem stellt die drei Bereiche auf einer Karte dar, wobei die Koordinaten der Raumberandung und der Bereiche eingegeben werden müssen. Eine Fahrwegfunktion erstellt auf der Karte Fahrwege für den Roboter-Staubsauger. Dazu wird zuerst ausgehend von den eingegebenen drei Bereichen durch das Weiterziehen deren Randlinien ein Rechteckraster auf der ganzen Karte eingezeichnet. Durch das Zusammenfügen von benachbarten Rechtecken mit der gleichen Eigenschaft entstehen Gebiete in denen Fahrwege geplant werden. Die Fahrwege der verschiedenen Gebiete werden über gemeinsame End- bzw. Anfangspunkte miteinander verbunden. Die Schritte für die automatische Aufteilung in Gebiete und die Festlegung von miteinander verbundenen Fahrwegen sind sehr aufwändig. Bei veränderten Verhältnissen im Raum müssen diese aufwändigen automatischen Schritte immer wieder neu durchgeführt werden.

DE 10 2011 003 064 A1 beschreibt ein Verfahren zur Bearbeitung einer Fläche mittels eines Roboter-Fahrzeuges. In einem ersten Schritt wird das Fahrzeug entlang der Umrisslinie der zu bearbeitenden Fläche geführt und dabei wird eine Umrisskarte erstellt. In einem zweiten Schritt wird die Fläche von der Steuerung in Einzelsegmente unterteilt. Bei der Unterteilung verwendet die Steuerung geometrische Grundformen, wobei die Anzahl und Grösse der Einzelsegmente über eine Vielzahl von zufälligen Einteilungen erfolgt. Dabei entsteht viel Rechenaufwand und die ermittelte Einteilung hängt lediglich von der Form der zu bearbeitenden Fläche ab und nicht von Eigenschaften deren Teilbereiche. In einem dritten Schritt werden der jeweiligen Form der Teilsegmente entsprechende Bearbeitungsmöglichkeiten in der Form von Eigenschaftsklassen festgelegt. Als Bearbeitungsmöglichkeiten sind das Abfahren eines vordefinierten Bewegungsweges oder das Fahren nach einem Zufallsprinzip beschrieben. In einem vierten Schritt wird die Reihenfolge der Bearbeitung der Einzelsegmente von der Steuerung festgelegt, beispielsweise so dass die kürzesten Wege zwischen den Einzelsegmenten erzielt werden. Nebst dem grossen Rechen- und Speicheraufwand ergibt sich bei Teilsegmenten mit zufälligen Fahrrichtungen auch ein grosser Zeitaufwand.

WO 2016/091312 A1 beschreibt für das Befahren einer Fläche nach einem Zufallsprinzip (zufällige Richtung beim Verlassen eines erreichten Randes) die Aufteilung der Fläche in Teilflächen, um zu gewährleisten, dass mit Zufallsbewegungen schwer zu erreichende Bereiche besser erreicht und wieder verlassen werden. Die Beschränkung der Zufallsbewegungen auf eine Teilfläche wird für den Teilflächen zugeordnete Aufenthalts-Zeiten festgelegt. Damit der Roboter nach Ablauf der jeweiligen Aufenthalts-Zeit die Teilfläche gezielt verlässt, ist entlang der Flächengrenze ein Draht verlegt, dem der Roboter bis zum Erreichen der nächsten Teilfläche folgt. Anstelle der für den Aufenthalt auf einer Teilfläche festgelegten Aufenthalts-Zeit, kann auch ein von einem Benützer oder von der Ladungsstation ausgehendes Signal den Wechsel auf eine andere Teilfläche auslösen. Bei dieser Lösung ist sowohl das Befahren der Teilflächen nach dem Zufalls Prinzip als auch das Wechseln zu einer anderen Teilfläche durch eine Fahrt entlang des Randes der Gesamtfläche zeitaufwändig. Der Wechsel zu einer anderen Teilfläche über eine Fahrt entlang des Randes der Gesamtfläche schränkt die Festlegung von erreichbaren Teilflächen ein.

EP 2 752 726 B1 beschreibt eine Lösung, die beispielsweise Ladenflächen reinigt, auf denen Verkaufsständer, Hinweisschilder, Paletten, Behälter oder direkt Produkte immer wieder anders angeordnet sind. Für das automatische Reinigen müssen die jeweils neuen Situationen nicht kartiert werden. Verstellbare Objekte und auch die Berandung der Bodenfläche werden als Hindernisse behandelt und daher immer dann erfasst, wenn die Bodenbehandlungsmaschine darauf trifft. Für die Behandlung einer Fläche wird eine Behandlungsrichtung festgelegt, aus der sich senkrecht dazu voneinander beabstandete Fahrlinien ergeben, wobei die Fahrrichtungen auf benachbarten Fahrlinien entgegengesetzt ausgerichtet sind. Auf den Fahrlinien werden jeweils bis zum Erreichen eines Hindernisses Wegsegmente von Anfangspunkten zu Endpunkten abgefahren. Bei einem Endpunkt wird zum Finden eines neuen Anfangspunktes eine Konturfolgebewegung ausgelöst, bei der die Bodenbehandlungsmaschine dem Hindernis folgt, bis sie auf eine Fahrlinie trifft. Beim Fahren entlang von Fahrlinien und bei den Konturfolgebewegungen wird die aktuelle Position und Ausrichtung der Bodenbehandlungsmaschine von einer Positions-Erfassungseinrichtung bereitgestellt.

Es hat sich nun gezeigt, dass die Lösung gemäss EP 2 752 726 B1 zwar für eine Standardbehandlung einer zu behandelnden zusammenhängenden Fläche gut geeignet ist. Wenn die zu behandelnde Fläche nicht zusammenhängend ist und wenn der Reinigungsablauf an zeitliche Vorgaben und/oder an bereichsweise unterschiedliche Reinigungsbedürfnisse angepasst sein muss, so ist dies mit einem erhöhten Bedienungsaufwand verbunden.

Automatische Bodenbehandlungen sind nicht auf das Reinigen beschränkt. Es kann beispielsweise auch eine Bearbeitung, wie das Schleifen der Bodenfläche oder das Auftragen einer Oberflächenschicht, von einer automatischen Bodenbehandlungsmaschine durchgeführt werden. Unter den Begriff der Bodenbehandlung fällt auch das Kontrollieren der Bodenfläche bzw. das Durchführen von Messungen an der gesamten Bodenfläche. Solche Messungen können mit Behandlungen an ausgewählten Stellen verbunden sein. Mit Bodenflächen sind nicht nur Flächen in Räumen gemeint, sondern auch Flächen im Freien, wobei dann anstelle der Wände, Säulen oder anderen Orientierungselementen sicherlich für Positionsbestimmungen Positionierungsbereiche vorgesehen werden können um daran Distanzmessungen zu machen. Die Bodenbehandlung im Freien kann vom Schneiden einer Rasenfläche, über Erdbearbeitung, Düngung, Säen, Unkrautbehandlung, Ernten bis zur Suche von Metallteilen oder gar Minen alles umfassen.

Die erfindungsgemässe Aufgabe besteht nun darin eine einfache Lösung zu finden, die mit einem möglichst kleinen Aufwand für das Erfassen, das Speichern und für die Behandlungsbewegung verbunden ist. Zudem soll die Lösung auch mit kleinem Bedienungsaufwand eingesetzt werden können, wenn die zu behandelnde Fläche nicht zusammenhängend ist und/oder wenn der Reinigungsablauf an zeitliche Vorgaben und/oder an bereichsweise unterschiedliche Reinigungsbedürfnisse oder Platzverhältnisse angepasst sein muss.

Die Aufgabe wird durch eine Bodenbehandlungsmaschine mit den Merkmalen des Anspruches 1, durch ein Verfahren mit den Merkmalen des Anspruchs 10 und ein Computerprogrammprodukt mit den Merkmalen des Anspruchs 14 gelöst. Die abhängigen Ansprüche beschreiben alternative bzw. vorteilhafte Ausführungsvarianten, welche weitere Aufgaben lösen.

Bei der Lösung der Aufgabe wurde erkannt, dass es viele Sitautionen gibt, in denen nicht einfach eine Fläche in einem im Wesentlichen in einer Richtung fortschreitenden Behandlungsvorgang behandelt werden kann. Wenn beispielsweise grosse Verkaufsflächen Bereiche mit unterschiedlichen Produkten umfassen, kann es sein, dass in einem Bereich Frischprodukte am Morgen in die Regale gefüllt werden und daher in dieser Zeit dort Fahrten einer Reinigungsmaschine die Einfüllarbeit behindern, bzw. die Reinigungsmaschine durch die Einfüllarbeit an einem genügenden Fortkommen gehindert wird. In Bereichen ohne Nachfüllarbeit könnte eine Reinigungsmaschine viel effizienter eingesetzt werden, wobei diese Bereiche sowohl von Bereichen der Verkaufsfläche ohne Einfüllarbeit oder auch von anderen Räumen im gleichen Gebäude gebildet werden können. Zudem kann es sein, dass ein Bodenbereich nach der Nachfüllarbeit gereinigt werden muss, beispielsweise weil von den nachgefüllten Produkten Verschmutzungen ausgehen.

Unterschiedlich verschmutzte Bereiche können selbst auf grossen zusammenhängenden Bodenflächen ohne Hindernisse auftreten, beispielsweise Turnhallenbereiche bei den Kreislinien vor Handballtoren. Solche Bereiche können zwei- oder mehrmalige Reinigungen nötig machen. Im Rahmen der Erfindung wurde erkannt, dass eine intensivere Reinigung von vorgegebenen Bereichen ermöglicht werden soll, ohne dass die gesamte Fläche gleich intensiv gereinigt wird. Für Bodenflächen mit begehbaren minimalen Hindernissen, wie etwa vorstehenden Führungslinien für Blinde, soll die erfinderische Lösung querende Reinigungs-Bewegungen vermeiden, weil beim Queren Störungen an einem am Boden anliegenden Behandlungsbereich auftreten können.

Es wurde erkannt, dass es für die in den obigen Beispielen benötigte Behandlungsflexibilität wichtig ist, dass Zonen festgelegt werden können, die nacheinander behandelt werden. Zudem wurde im Rahmen der Erfindung erkannt, dass der für die Behandlung von Zonen nötige Aufwand dann möglichst klein bleibt, wenn die Steuerung für festgelegte Zonen nicht jeweils mit grossem Aufwand optimierte Fahrwege berechnen muss. Ein Befahren der Zonen nach einem Zufallsprinzip wird aufgrund des grossen Zeitaufwands ausgeschlossen. Die erfinderische Lösung umfasst eine Zonenbildung, eine Fahrlösung innerhalb der Zonen sowie das Wechseln von einer Zone zu einer anderen Zone.

Die erfindungsgemässe Steuerung der Behandlungsmaschine, bzw. das erfindungsgemässe Verfahren, bzw. das Computerprogrammprodukt, welches die Durchführung eines Verfahrens ermöglicht, umfasst einen Planungsmodus, welcher auf einer zu behandelnden Bodenfläche mindestens zwei Zonen, in jeder Zone einen ersten Knoten und von mindestens einer Zone einen Verbindungsweg zu einem ersten Konten einer anderen Zone festlegbar macht. Zum Festlegen einer Zone ist zumindest ein Bereich ihres Zonenrandes als virtuelles Hindernis eingebbar, so dass eine direkte Verbindung zwischen dem ersten Knoten der festgelegten Zone und dem ersten Knoten einer anderen Zone vom eingegebenen Bereich des Zonenrandes aufgrund realer und virtueller Hindernisse unterbrochen ist.

Der Behandlungsmodus der Behandlungsmaschine bzw. des Verfahren verhindert einen Wechsel der Bodenbehandlungsmaschine von einer unter Behandlung stehenden aktuellen Zone zu einer anderen zu behandelnden Zone aufgrund realer und virtueller Hindernisse. Eine Fahrt von dieser aktuellen Zone zum ersten Knoten der anderen zu behandelnden Zone wird erst möglich gemacht, wenn die aktuelle Zone im Wesentlichen vollständig behandelt ist. Dann kann die Wirkung eines als virtuelles Hindernis des zwischen den ersten Knoten der beiden Zonen angeordneten Bereichs des Zonenrandes der aktuellen Zone aufgehoben werden. Es versteht sich von selbst, dass nebst der vollständigen Behandlung auch zusätzliche Kriterien für das Zulassen einer Fahrt aus der aktuellen Zone hinaus vorgesehen werden können, beispielsweise eine vorgebbare Zeit.

Ein effizientes vollständiges Behandeln einer Zone ohne von der Steuerung festzulegende Fahrwege kann mit dem folgenden Vorgehen erzielt werden. Ausgehend vom Knotenpunkt einer Zone werden senkrecht zu einer Behandlungsrichtung dieser Zone voneinander beabstandete Fahrlinien festgelegt, wobei die Fahrrichtungen auf benachbarten Fahrlinien entgegengesetzt ausgerichtet sind. Auf den Fahrlinien werden jeweils bis zum Erreichen eines Hindernisses Wegsegmente von Anfangspunkten zu Endpunkten abgefahren. Zu jedem Endpunkt eines Wegsegmentes wird dessen Anfangspunkt, dessen Endpunkt und einer der Zustände "vollständig behandelt" oder "unvollständig behandelt" sowie zumindest bei "unvollständig behandelt" zusätzlich eine Richtungsinformation gespeichert. Aus der Richtungsinformation geht hervor, in welcher Richtung ausgehend vom entsprechenden Endpunkt unvollständig behandelte Bereiche vorliegen.

Der einem aktuellen Endpunkt zuzuordnende Zustand "vollständig behandelt" oder "unvollständig behandelt" wird vorzugsweise anhand der Distanz vom aktuellen Endpunkt zum nächstgelegenen Anfangspunkt auf einer Fahrlinie, die in der aktuellen Orientierung der Behandlungsrichtung direkt vor der Fahrlinie mit dem aktuellen Endpunkt liegt, bestimmt, wobei bei einem Abstand über einem vorgegebenen Wert der Zustand "unvollständig behandelt" gewählt wird. Der vorgegebene Wert entspricht vorzugsweise mindestens der Ausdehnung der Bodenbehandlungsmaschine quer zu ihrer Fahrrichtung, so dass "unvollständig behandelt" dann gewählt wird, wenn die Bodenbehandlungsmaschine zwischen dem aktuellen Endpunkt und dem nächstgelegenen Anfangspunkt auf einer Fahrlinie vor der Fahrlinie mit dem aktuellen Endpunkt genügend Platz für eine Durchfahrt hat. Diese mögliche Durchfahrt wird aufgrund der aktuellen Orientierung der Behandlungsrichtung jetzt noch nicht gesucht. Mit der zum aktuellen Endpunkt durchgeführten Speicherung der Angabe "unvollständig behandelt" und der Richtungsinformation, aus der hervorgeht, in welcher Richtung ausgehend vom aktuellen Endpunkt ein unvollständig behandelter Bereich vorliegt, kann zu einem späteren Zeitpunkt von diesem Endpunkt aus in der geänderten Richtung der unbehandelte Bereich angefahren werden.

Bei einem Endpunkt wird zum Finden eines neuen Anfangspunktes eine Konturfolgebewegung ausgelöst, bei der die Bodenbehandlungsmaschine dem Hindernis folgt, bis sie auf eine Fahrlinie trifft, wobei die Konturfolgebewegung in Richtung der jeweils aktuellen Orientierung der Behandlungsrichtung beginnt. Wenn dabei die vor der Konturfolgebewegung befahrene Fahrlinie auf einem noch nicht abgefahrenen Wegsegment getroffen wird, wird dort ein neuer Anfangspunkt festgelegt sowie die Fahrrichtung dieser Fahrlinie beibehalten. Wenn eine benachbarte Fahrlinie auf einem noch nicht abgefahrenen Wegsegment getroffen wird, wird dort ein neuer Anfangspunkt festgelegt sowie die Fahrrichtung dieser benachbarten Fahrlinie gewählt. Wenn eine Fahrlinie auf einem bereits abgefahrenen Wegsegment getroffen wird, wird das Ende einer Gruppe von nebeneinander verlaufenden Wegabschnitten festgestellt und ein Endpunkt mit dem Zustand "unvollständig behandelt" gesucht, um von diesem Endpunkt aus in die zum Endpunkt gespeicherte Orientierung der Behandlungsrichtung eine neue Gruppe von nebeneinander verlaufenden Wegabschnitten in Angriff zu nehmen bis kein Endpunkt mit dem Zustand "unvollständig behandelt" mehr vorhanden ist.

Wenn in der aktuellen Zone nach dem Befahren dieser Zone kein Endpunkt mit dem Zustand "unvollständig behandelt" mehr vorhanden ist, kann eine Fahrt von dieser aktuellen Zone zum ersten Knoten der anderen zu behandelnden Zone ermöglicht werden, weil dann die aktuelle Zone im Wesentlichen vollständig behandelt ist. Nach dem Erreichen des ersten Knotens der anderen zu behandelnden Zone wird mindestens ein Bereich des Zonenrandes der anderen zu behandelnden Zone als virtuelles Hindernis eingesetzt, so dass ein Austritt aus der anderen zu behandelnden Zone bis zu deren vollständigen Behandlung verhindert wird. Der Beginn der Behandlung der neuen akttuellen Zone kann gegebenenfalls auch noch von weiteren Bedingungen, beispielsweise einer vorgegebenen Zeit, abhängen.

Die erfinderische Lösung ermöglicht für frei wählbare Zonen eine Bodenbehandlung, welche keine Fahrwege auf zu behandelnden Flächen berechnet und auch nicht zufällige Fahrwege ausführt. Mit minimalen Fahr- und Speicherschritten wird nacheinander ein einfaches und sicheres Behandeln der Zonen ermöglicht. Die Berandung der Bodenfläche und der Zonenrand der jeweils aktuelle Zone wird als reales oder virtuelles Hindernis behandelt und daher immer dann erfasst, wenn die Bodenbehandlungsmaschine darauf trifft.

Reale Hindernisse und damit auch die Bodenberandung werden vorzugsweise über Distanzmessungen eines Scan-Sensors der Bodenbehandlungsmaschine erfasst, wobei der Scan-Sensor insbesondere vor den Antriebsrädern im Wesentlichen im Höhenbereich der Antriebsräder angeordnet ist. Bei einer bevorzugten Ausführung wird ein Laser-Scanner verwendet, der einen Winkelbereich von 270° abdeckt.

Damit auch reale Hindernisse oder Bodenberandungen erfasst werden, welche sich nicht über den Höhenbereiche mit dem Scan-Sensor erstrecken, werden vorzugsweise auch andere Sensoren für die Hinderniserkennung eingesetzt. Die Bodenbehandlungsmaschine umfasst beispielsweise Ultraschallsensoren und/oder Infrarotsensoren. Die Ultraschallsensoren sind vorzugsweise so ausgerichtet, dass sie Hindernisse erfassen, welche sich in einem Abstand vom Boden gegen das Innere der Bodenfläche erstrecken. Die Infrarotsensoren sind vorzugsweise gegen den Boden gerichtet, um Hindernisse im Boden, insbesondere Stufen, zu erfassen.

Zur Hinderniserkennung kann die Bodenbehandlungsmaschine auch mindestens einen Kontaktsensor umfassen, wobei vorzugsweise mindestens ein Auslenkungssensor zwischen einem Fahrgestell und einem in Fahrrichtung vorne liegenden Gehäusebereich angeordnet ist. Wenn nun ein Hindernis mit dem vorne liegenden Gehäusebereich in Kontakt kommt, wird das Hindernis erkannt, die Bodenbehandlungsmaschine gestoppt und das detektierte Hindernis umfahren.

Die Hindernisse umfassen nebst den physischen Hindernissen auch virtuelle Hindernisse, wie die bereits erwähnten Bereiche der Zonenränder oder beispielsweise offene Türen, die nicht durchfahren werden sollen. Die virtuellen Hindernisse werden bei einer bevorzugten Ausführungsform über eine Steuerung für die Bodenbehandlungsmaschine eingegeben und haben die gleiche Wirkung wie reale Hindernisse.

Beim Fahren entlang von Fahrlinien, bei den Konturfolgebewegungen und bei Fahrten zum ersten Knoten einer anderen Zone wird die aktuelle Position und Ausrichtung der Bodenbehandlungsmaschine von einer Positions-Erfassungseinrichtung bereitgestellt. Beim Fahren entlang von Fahrlinien wird geprüft, ob die aktuellen Positionsinformationen zu Positionen auf der aktuellen Fahrlinie passen. Bei Abweichungen wird die Fahrbewegung entsprechend korrigiert. Bei den Konturfolgebewegungen werden die aktuellen Positionsinformationen verwendet, um das Auftreffen auf eine Fahrlinie zu erfassen. Weil bei der Konturfolgebewegungen nur auf die aktuelle oder die nächste Fahrlinie aufgetroffen werden kann, müssen lediglich Informationen für zwei Fahrlinien bereitgehalten werden. Beim Folgen der Kontur eines Hindernisses müssen zudem die Daten zum Hindernis bzw. zu dessen Erfassung verwendet werden.

Wenn bei einer Konturfolgebewegung die Bodenbehandlungsmaschine bei einem Auftreffpunkt auf eine Fahrlinie trifft, muss geprüft werden, ob dieser Auftreffpunkt auf einem bereits abgefahrenen Wegsegment liegt. Dazu kann mit den aktuellen Informationen des Wegsegmentspeichers geprüft werden, ob der Auftreffpunkt auf einer Linie zwischen einem Paar von gespeicherten Anfangs- und Endpunkten liegt. Aufgrund der kleinen Datenmenge des Wegsegmentspeichers ist auch der Lese- und Vergleichsaufwand für das Prüfen des Auftreffpunktes bezüglich seiner möglichen Lage zwischen gespeicherten Anfangs- und Endpunkten sehr klein.

Beim Fahren entlang von Fahrlinien, beim Durchführen von Konturfolgebewegungen und bei Fahrten zu einer anderen Zone sind die Anforderungen an die Speichergrösse und an die Rechenleistung klein, weil die aktuellen Positionen lediglich mit Liniengleichungen und einer kleinen Anzahl von Punktepaaren in Beziehung gebracht werden müssen.

Gemäss einer bevorzugten Ausführungsform kann im Planungsmodus jedem ersten Knoten und damit der Zone, welcher der erste Knoten zugeordnet ist, eine Behandlungsrichtung zugeordnet werden, welche im Behandlungsmodus verwendet wird. Die Fahrlinien verlaufen jeweils senkrecht zur Behandlungsrichtung. Die Positionen der ersten Knoten und die dazugehörigen Behandlungsrichtungen ermöglichen die Behandlung aller Zonen, ohne dass eine Bedienungsperson benötigt wird. Es ist anzunehmen, dass die beste Behandlungsrichtungen in einer Zone jeweils parallel oder senkrecht zu einem Zonenrand verläuft. Wenn aber im Innern einer Zone grosse verstellbare Elemente mit anders gerichteten Aussenrändern angeordnet sind, so kann es sein, dass auch eine an diese Elemente angepasste Behandlungsrichtung optimal ist. Die erfindungsgemässe Lösung hat den Vorteil, dass Bedienungspersonal mit seiner Erfahrung und einer groben Beurteilung der Zonen unter Berücksichtigung des Zonenrandes und von möglicherweise vorhandenen verstellbaren Elementen im Planungsmodus eine optimale Behandlungsrichtung festlegen kann.

Der Planungsmodus macht sowohl voneinander beabstandete, aneinander angrenzende und auch überlappende Zonen festlegbar, wobei zu jeder Zone zumindest ein Bereich ihres Zonenrandes, vorzugsweise auch der gesamte Zonenrand, als virtuelles Hindernis eingebbar ist und jeweils von den virtuellen Hindernissen nur diejenigen der aktuell bearbeiteten Zone wirksam sind und somit Zonenränder anderer Zonen überfahrbar sind.

Im Behandlungsmodus wird die Bodenbehandlungsmaschine ausgehend vom ersten Knoten einer aktuellen Zone bewegt. Wenn in der aktuellen Zone nach dem Befahren dieser Zone kein Endpunkt mit dem Zustand "unvollständig behandelt" mehr vorhanden ist, fährt die Behandlungsmaschine vorzugsweise zum ersten Knoten der aktuellen Zone. Der Wechsel von der aktuellen Zone zu einer anderen Zone erfolgt dann mittels einer Fahrt der Bodenbehandlungsmaschine vom ersten Knoten der aktuellen Zone zum ersten Knoten einer anderen Zone, wobei die Bodenbehandlungseinrichtung auf der Fahrt zwischen diesen beiden ersten Knoten in einem angehobenen Zustand ist und daher auch Unebenheiten störungsfrei überqueren kann.

Für Bodenflächen mit begehbaren minimalen Hindernissen, wie etwa vorstehenden Führungslinien für Blinde, wird vorzugsweise mindestens ein Zonenrand, vorzugsweise aber die Ränder von zwei je auf einer Seite liegenden Zonen, entlang dieser minimalen Hindernisse gelegt, so dass diese nur beim Zonenwechsel und dann mit angehobener Bodenbehandlungseinrichtung überquert werden. Damit werden Störungen vermieden.

In einer vorteilhaften Ausführungsform macht der Planungsmodus mindestens einen weiteren Knoten und dessen Reihenfolge auf dem Weg zwischen zwei ersten Knoten festlegbar und der Behandlungsmodus führt den Wechsel von der aktuellen Zone zu einer anderen Zone mittels einer Fahrt der Bodenbehandlungsmaschine über den mindestens einen weiteren Knoten durch. Mit der Festlegung von weiteren Knoten und einer Reihenfolge, gemäss welcher sie angefahren werden, können auch längere oder schwierigere Wege zu einer anderen Zone ermöglicht werden. Weitere Knoten können auf einen Durchgangsweg, insbesondere ausserhalb aller zu behandelnden Zonen gelegt werden. Im Behandlungsmodus kann bei diesen weiteren Knoten gegebenenfalls das Öffnen einer Tür oder das Auslösen einer Fahrt mit einem Aufzug erzielt werden. Nach dem Start eines Behandlungsablaufs kann die Bodenbehandlungsmaschine alle in einer Ablaufplanung als zu behandelnde Zonen festgelegten Gebäudebereich anfahren und behandeln. Für den Wechsel von einer behandelten Zone zu einer nächsten Zone wird kein Bedienungspersonal benötigt.

Im Planungsmodus kann einem Wechselweg zwischen zwei ersten Knoten eine oder beide Verbindungsrichtungen zugeordnet werden und im Behandlungsmodus ist der Wechselweg entsprechend in einer oder in beiden Verbindungsrichtungen fahrbar. Es ist einfach möglich verschiedene im Planungsmodus erstellte Abläufe von nacheinander zu behandelnden Zonen zu speichern. Diese Abläufe stehen für den Behandlungsmodus zur Auswahl und sind für das Bedienungspersonal beispielsweise über einen Touchscreen wählbar. Die erfinderische Lösung gewährleistet mit minimalen Vorgaben und Berechnungen eine grösstmögliche Behandlungssicherheit.

Eine Bodenbehandlungsmaschine bzw. ein Verfahren mit den oben aufgeführten Fahrschritten und gespeicherten Informationen kann erfolgreich betrieben werden, wenn bei Bedarf, also insbesondere beim Speichern von Anfangspunkten und Endpunkten sowie bei der Kontrolle der Position und Ausrichtung relativ zu Fahrlinien, die Position und die Ausrichtung der Bodenbehandlungsmaschine ermittelt werden können.

Gemäss der allgemeinsten Ausführung der Erfindung, stellt eine Positions- und Ausrichtungs-Erfassungseinrichtung die aktuelle Position und Ausrichtung auf Abfrage bereit. Dabei kann eine beliebige aus dem Stande der Technik bekannten Positions- und Ausrichtungs-Erfassungseinrichtung verwendet werden.

Aus der Vermessungstechnik sind beispielsweise Totalstationen mit automatischer Zielerfassung und Zielverfolgung bekannt (beispielsweise das handelsübliche Produkt mit der Bezeichnung Leica iCON robot 50). Wenn nun eine solche Totalstation ortsfest im Bereich der zu behandelnden Bodenfläche angeordnet wird, kann die Bodenbehandlungsmaschine bei Bedarf ihre Position und Ausrichtung über eine Funkverbindung von der Totalstation beziehen. Wenn die Bodenbehandlungsmaschine beispielsweise zwei von der Totalstation verfolgbare, auf ihrer Oberseite versetzt angeordnete Prismen umfasst, so kann aus den Positionen dieser beiden Prismen die Position und Ausrichtung der Bodenbehandlungsmaschine bestimmt werden.

Aus der Roboter Steuerung sind auch Laser Tracker basierte Positions- und Ausrichtungsbestimmungen bekannt (beispielsweise der 6DoF Leica Absolute Tracker AT901). Ein Laser Tracker kann in die Bodenbehandlungsmaschine integriert werden und gewährleistet Positions- und Ausrichtungsbestimmungen mit hoher Genauigkeit.

Es versteht sich von selbst, dass sowohl ortsfeste Positionsbestimmungsgeräte zum Erfassen der Bodenbehandlungsmaschine als auch auf der Bodenbehandlungsmaschine angeordnete Vermessungssysteme, die sich an ortsfesten Elementen orientieren, eingesetzt werden können. Weil die Sicht auf Markierungen an der Decke meist aus einem grossen Raumbereich möglich ist, sind auf der Bodenbehandlungsmaschine angeordnete Vermessungssysteme geeignet, welche sich bzw. das Koordinatensystem an Markierungen an der Decke orientieren.

In einer bevorzugten Ausführungsform wird auf ortsfeste Komponenten der Positions- und Ausrichtungs-Erfassungseinrichtung verzichtet. Dabei entsteht ein völlig autonomes Gerät, das auf allen möglichen Bodenflächen einsetzbar ist, wobei der Bodenfläche einzelne feste Elemente, wie die Bodenfläche berandende Wandabschnitte oder auf der Bodenfläche angeordnete Elemente, Säulen, innere Wandabschnitte oder feste Regale zugeordnet sein müssen, welche als Positionierungsbereiche verwendet werden. Um eine Positions- und Ausrichtungsbestimmung zu ermöglichen, macht die Steuerung der Bodenbehandlungsmaschine einen Erfassungsmodus durchführbar, bei dem aus Distanzmessungen des Scan-Sensors und Fahrinformationen der Antriebsräder das Erfassen von Positionierungsbereichen in einem der Bodenfläche zugeordneten Boden-Koordinatensystem durchführbar ist.

Bevor eine Bodenfläche von der Bodenbehandlungsmaschine behandelt werden kann, muss die Bodenbehandlungsmaschine im Erfassungsmodus über verschiedene Bereiche der Bodenfläche geführt werden, damit sie Positionierungsbereiche erfassen kann. Der Erfassungsmodus macht zum Erfassen der Positionierungsbereiche Liniensegmente im Boden-Koordinatensystem bestimmbar, wobei die bestimmten Liniensegmente gemessene Distanzpunkte an den Positionierungsbereichen mit Parametern von Kurvengleichungen als Abschnitte von kontinuierlichen Linien darstellen.

Im Behandlungsmodus macht die Bodenbehandlungsmaschine ihre Position und Ausrichtung im Boden-Koordinatensystem aus den erfassten Positionierungsbereichen und den für eine aktuelle Position erfassten Distanzmessungen des Scan-Sensors bestimmbar. Gegebenenfalls werden für die Bestimmung einer aktuellen Position und Ausrichtung der Bodenbehandlungsmaschine auch Fahrinformationen der Antriebsräder verwendet. Ausgehend von einer genauen Positionsbestimmung, die aus einer guten Übereinstimmung von beispielsweise mindestens zwei Positionierungsbereichen und den für eine aktuelle Position erfassten Distanzmessungen hervorgeht, kann mit der Verfolgung des Fahrweges, bzw. mit der Fahrinformation der Antriebsräder, auch auf der Weiterfahrt eine relativ genaue Position und Ausrichtung bestimmt werden, selbst wenn auf der Weiterfahrt keine Positionierungsbereiche sichtbar sind.

In einer bevorzugten Ausführungsform wird die effektive Ausdehnung des Gehäuses und/oder die effektive Lage des Behandlungsbereichs relativ zu den Rädern berücksichtigt und dabei im Lichte der effektiven Distanzmessungen zu einem Hindernis eine möglichst genaue Vorbeifahrt und Führung des Behandlungsbereichs beim Hindernis erzielt.

Eine bevorzugte Bodenbehandlungseinrichtung ist als Reinigungseinrichtung ausgebildet, vorzugsweise mit mindestens einer Bürste, einer Reinigungsflüssigkeitszuführung und einer Absauganordnung gegebenenfalls aber mit einem Trockensauger, oder einem Sprühextraktionsgerät oder einer Kehrmaschine. Für die Reinigungsflüssigkeit muss mindestens ein Tank und mindestens eine Pumpe vorgesehen werden. Vorzugsweise gibt es einen Tank für Reinigungsflüssigkeit, bzw. Wasser mit Reinigungsmittel, und einen Tank für das Reinigungsmittel, das dem Wasser zugegeben wird. Um auf ein häufiges Auswechseln der Reinigungsflüssigkeit verzichten zu können, ist diesem Tank eine Membrane zugeordnet. Die Membrane dient als flexible Wand zwischen Frisch- und Schmutzwasser, wobei der vorhandene Raum je nach Bedarf für Frisch- und Schmutzwasser aufgeteilt wird. Die Antriebsvorrichtung umfasst mindestens eine Batterie und mindestens einen Antriebsmotor. Die Steuerung umfasst eine Anzeige- und Eingabeeinrichtung, vorzugsweise einen Touchscreen. Um die Bodenbehandlungsmaschine in einem Notfall schnell ausschalten zu können ist auch ein gut erkennbarer Not-aus-Schalter vorgesehen.

Die Zeichnungen erläutern die Erfindung anhand eines Ausführungsbeispieles auf das sie aber nicht eingeschränkt ist. Dabei zeigt
- Fig. 1: eine perspektivische Darstellung einer automatischen Reinigungsmaschine,
- Fig. 2: eine seitliche Ansicht einer automatischen Reinigungsmaschine,
- Fig. 3: eine Darstellung gemäss Fig. 1 aber mit aufgeschwenkter Gehäusefront,
- Fig. 4: eine perspektivische Darstellung der aufschwenkbaren Gehäusefront,
- Fig. 5: eine Untersicht der automatischen Reinigungsmaschine,
- Fig. 6: eine schematische Zusammenstellung der wichtigsten Elemente der Steuerung, der Sensoren und des Antriebs der automatischen Reinigungsmaschine,
- Fig. 7 bis 12: schematische Darstellungen zur Bodenbehandlung einer Zone,
- Fig. 13: ein Flussdiagram zur Bodenbehandlung,
- Fig. 14: in einem Koordinatensystem dargestellte, in einem Erfassungsmodus aus Distanzmessungen des Scan-Sensors und Fahrinformationen der Antriebsräder zu Positionierungsbereichen bestimmte Liniensegmente, und
- Fig. 15: in einem Koordinatensystem dargestellte Liniensegmenten gemäss Fig. 14 und den Liniensegmenten überlagerte an einer eingezeichneten Position der Bodenbehandlungsmaschine erfasste Distanzpunkte und die durch die Distanzpunkte legbaren Linien von aktuell vorliegenden Elementen, und
- Fig. 16: eine schematische Darstellung eines im Planungsmodus erstellten Plans.

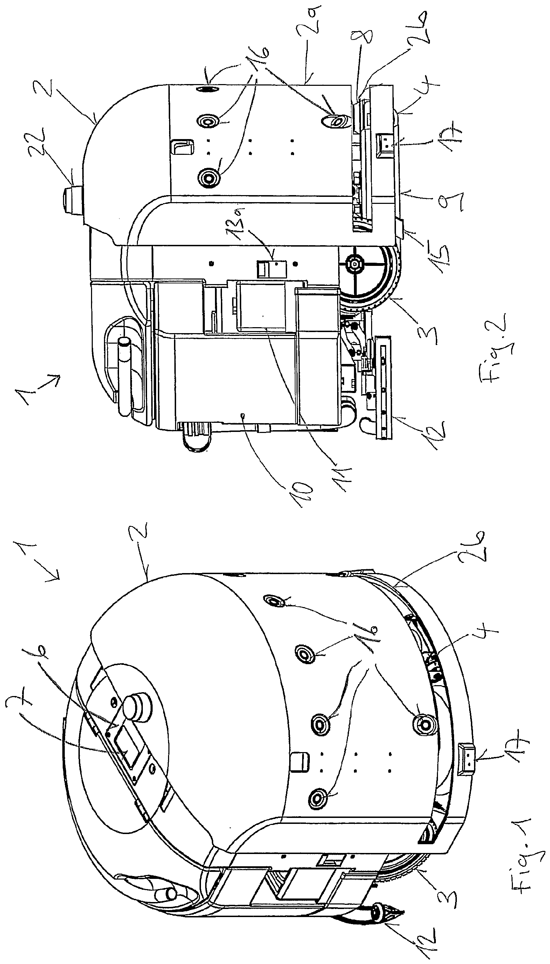

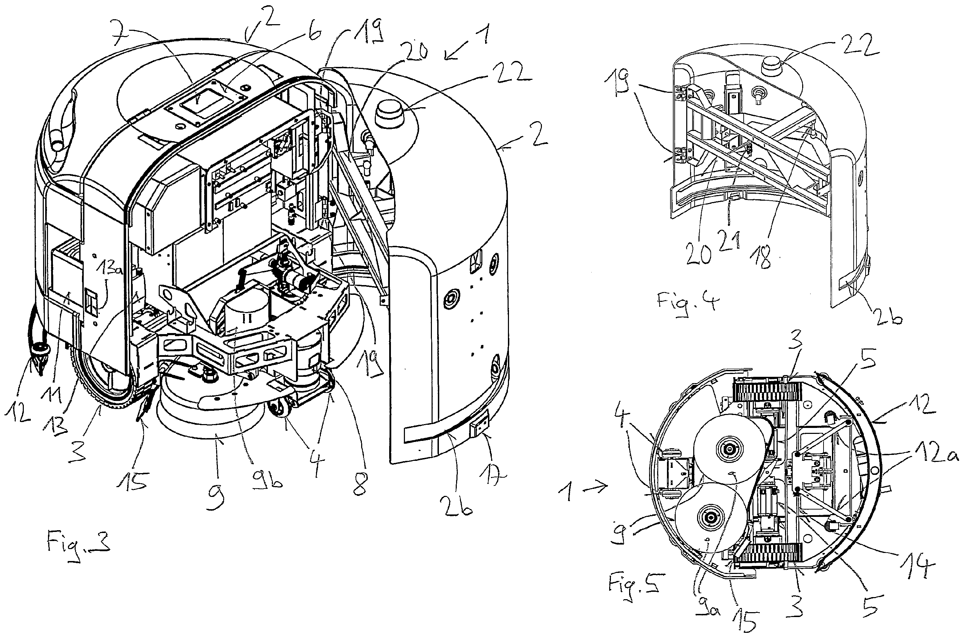

Fig. 1 bis 3 und 5 zeigen als Beispiel einer Bodenbehandlungsmaschine eine Reinigungsmaschine 1 zum Behandeln von Bodenflächen, mit einem Gehäuse 2, zwei Antriebsrädern 3, zwei schwenkbaren Stützrädern 4, einer Antriebsvorrichtung 5 mit je einem Motor pro Antriebsrad 3, einer Steuerung 6 mit einer Anzeige- und Eingabeeinrichtung 7 in der Form eines Touchscreens, mindestens einem Scan-Sensor 8, der in einer im Wesentlichen horizontalen Ebene über einen vorgegebenen Winkelbereich Distanzmessungen durchführbar macht, und mit einer Bodenbehandlungseinrichtung 9, die in einem Behandlungsbereich mit einer vorgegebenen Lage relativ zu den Rädern 3, 4 sowie mit einer Behandlungsbreite senkrecht zur Fahrrichtung eine Behandlung des Bodens erzielbar macht.

Die Bodenbehandlungseinrichtung 9 der dargestellten Reinigungsmaschine umfasst zwei oder drei um seitlich versetzt angeordnete vertikale Achsen drehende auswechselbare Bürsten oder Pads 9a. Die Bürsten 9a werden von einem Bürstenantrieb 9b in Drehung versetzt. Mit einer nicht dargestellten Reinigungsflüssigkeitszuführung wird im Bereich der Bürsten 9a mit einer Pumpe Reinigungsflüssigkeit aus einem ersten Tank 10 zugeführt. Aus einem zweiten Tank 11 kann Reinigungsmittel in die Reinigungsflüssigkeit eingebracht werden. Nach der Bodenbehandlung durch die Bürsten 9a wird die auf dem Boden zurückbleibende Reinigungsflüssigkeit von einer Absauganordnung 12 abgesaugt und dem ersten Tank 10 zugeführt. Um auf ein häufiges Auswechseln der Reinigungsflüssigkeit verzichten zu können, ist dem ersten Tank eine Membrane zugeordnet, welche unerwünschte Anteile im ersten Tank 10 zurückhält. Die elektrische Energie aller elektrisch betriebenen Komponenten stammt von mindestens einer aufladbaren Batterie 13, die über einen Stecker 13a mit einem Ladegerät verbindbar ist. Die Absauganordnung 12 ist vorzugsweise über eine Nachführverbindung 12a etwas schwenkbar am Fahrgestell 14 angeordnet, so dass die Absauganordnung 12 auch bei Kurvenfahrten immer dem feuchten Bodenbereich zugeordnet ist.

Weil die Bürsten 12 bezüglich einer zentralen Achse in Fahrrichtung der Reinigungsmaschine etwas auf eine Seite versetzt angeordnet sind, erfolgt die Reinigung auf dieser Seite im Wesentlichen bis in den Bereich mit dem Antriebsrad 3. Damit die Antriebswirkung des Antriebsrads 3 von der Reinigungsflüssikeit nicht beeinträchtigt wird, lenkt ein Abstreifer 15 die Reinigungsflüssigkeit gegen das Zentrum der Reinigungsmaschine 1 ab.

Damit auch Hindernisse oder Bodenberandungen erfasst werden, welche sich nicht über den Höhenbereiche mit dem Scan-Sensor 8 erstrecken, werden vorzugsweise auch andere Sensoren für die Hinderniserkennung eingesetzt. In der dargestellten Ausführungsform sind mehrere Ultraschallsensoren 16 im vorderen Bereich des Gehäuses 2 angeordnet, wobei die Anordnung auf zwei verschiedenen Höhen und die Möglichkeit Ultraschallpulse bei einem beliebigen Ultraschallsensoren 16 auszusenden und bei einem beliebigen Ultraschallsensoren 16 zu empfangen eine gute Erfassung von Hindernissen gewährleistet, welche sich in einem Abstand vom Boden gegen das Innere der Bodenfläche erstrecken. Mit zwei je seitlich vorne angeordneten, gegen den Boden gerichteten Infrarotsensoren 17 werden Hindernisse im Boden, insbesondere Stufen, erfasst.

Zur Hinderniserkennung ist auch mindestens ein Kontaktsensor 18 in der Form eines Auslenkungssensors vorgesehen, welcher zwischen dem Fahrgestell 14 und einem in Fahrrichtung vorne liegenden Gehäusebereich 2a angeordnet ist. Wenn nun ein Hindernis mit dem vorne liegenden Gehäusebereich 2a in Kontakt kommt, wird der Gehäusebereich 2a vom Hindernis relativ zum Fahrgestell 14 ausgelenkt, was der Auslenkungssensor erfasst.

Um für Wartungsarbeiten einfach zum Innern der Reinigungsmachine Zugang zu erhalten ist das Fahrgestell 14 über eine Schwenkverbindung 19 mit einer Gehäusehalterung 20 zum Halten des vorne liegenden Gehäusebereichs 2a verbunden. Zwischen der Gehäusehalterung 20 und dem vorne liegenden Gehäusebereich 2a sind Federverbindungen 21 angeordnet, welche den vorne liegenden Gehäusebereich 2a in einer Gleichgewichtslage halten, aus der dieser bei einem Kontakt zu einem Hindernis ausgelenkt wird, wobei der Kontaktsensor 18 zwischen der Gehäusehalterung 20 und dem vorne liegenden Gehäusebereich 2a diese Auslenkung erfasst. Damit der Scan-Sensor 8 im Scan-Bereich eine freie Sicht hat, weist der Gehäusebereich 2a einen Durchlassschlitz 2b auf. Auf der Oberseite des Gehäuses 2 ist eine Warnlampe und/oder ein Not-aus-Schalter 22 angeordnet.

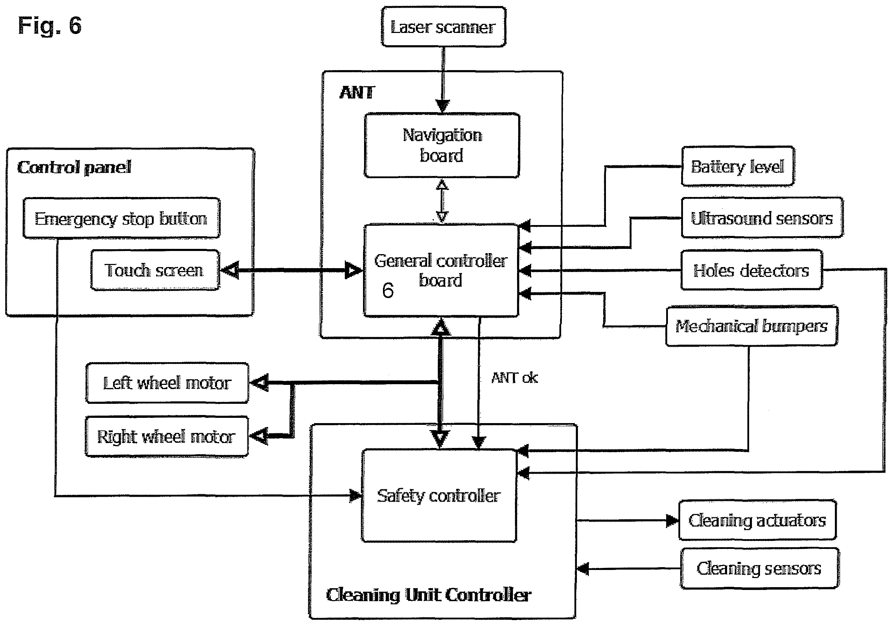

Fig. 6 zeigt, dass zumindest ein Teil der Steuerung 6 im Wesentlichen mit allen Sensoren und Antrieben verbunden ist. Für die Navigation ist der Teil der Steuerung 6 in der Form des "General controller board" mit einem "Navigation board" verbunden, welches in der dargestellten Ausführungsform direkt mit dem Scan-Sensor "Laser Scanner" verbunden ist. Es versteht sich von selbst, dass auch Navigationslösungen verwendet werden können, welche ohne Scan-Sensor funktionieren (beispielsweise Positionierung mit Totalstationen oder Laser-Trackern), wobei dann der Scan-Sensor "Laser Scanner" für die Hinderniserkennung direkt am "General controller board" angeschlossen ist.

Für die Hinderniserkennung ist das "General controller board" mit mindestens einem Sensor aus der Gruppe Scan-Sensor "Laser scanner", Ultraschallsensor "Ultrasound sensors", Infrarotsensor "Holes detectors", Kontaktsensor "Mechanical bumpers" verbunden. Wenn ein Hindernis bzw. eine Notsituation nur mit dem Kontaktsensor "Mechanical bumpers", dem Infrarotsensor "Holes detectors" oder dem Not-aus-Schalter erkannt wird, so ist es vorteilhaft, wenn diese Elemente direkt mit einer Sicherheitssteuerung "Safety controller" verbunden sind, welche einen sofortigen Stopp der Antriebsräder auslösen kann, um einen Schaden zu verhindern. Die Sicherheitssteuerung und die Steuerung 6 sind miteinander und mit der Antriebsvorrichtung verbunden, wobei die Antriebsvorrichtung vorzugsweise für beide Antriebsräder je einen Motor umfasst.

Ein Teil der Steuerung 6 ist mit der Anzeige- und Eingabeeinrichtung "Touchscreen" verbunden. In der dargestellten Ausführungsform ist die Steuerung der Bodenbehandlungseinrichtung 9 in einer Reinigungssteuerung "Cleaning unit controller" angeordnet, welche mit der Steuerung 6 und den Betätigungselementen "Cleaning actuators" und Sensoren "Cleaning sensors" der Bodenbehandlungseinrichtung 9 verbunden ist. Vorzugsweise umfasst die Steuerung für den Planungsmodus einen Teil der auf einem nicht dargestellten Rechner mit einem genügend grossen Display lauft. Die Zonengrenzen, die ersten Knoten, die Behandlungsrichtungen und die Verbindungswege zwischen den Zonen können auf dem nicht dargestellten Rechner eingegeben und als Ablauf dem "General controller board" zugänglich gemacht werden.

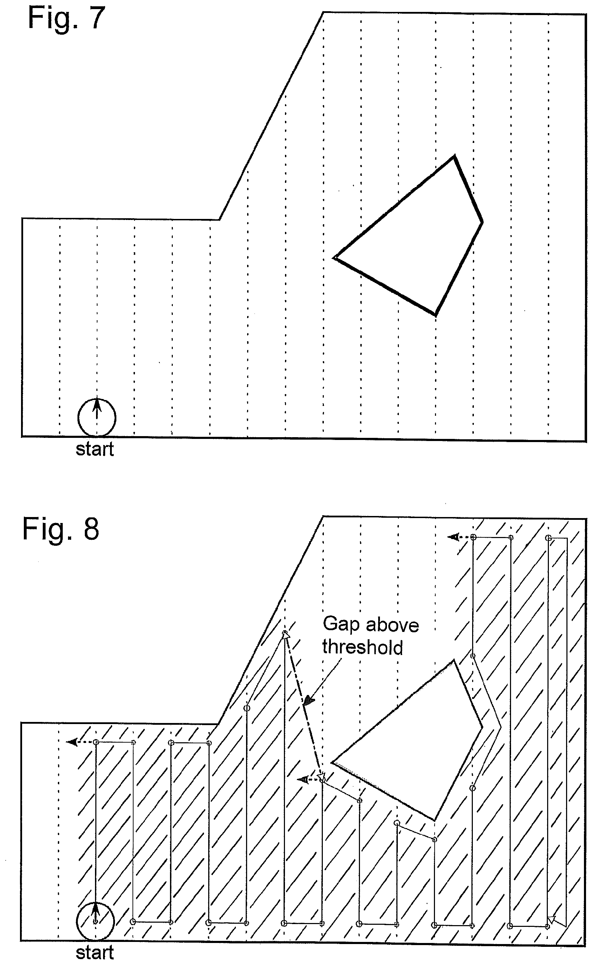

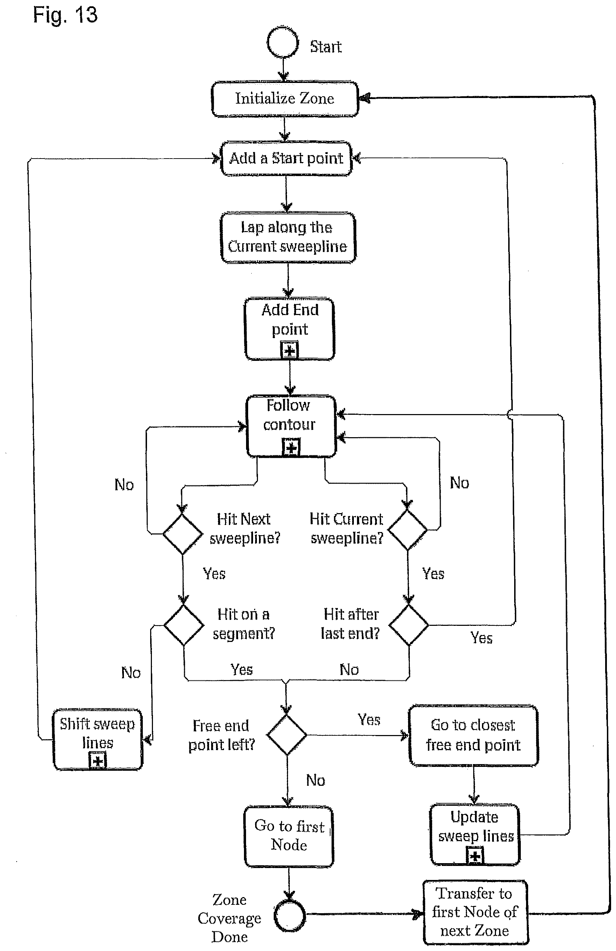

Fig. 7 bis 12 beschreiben anhand eines Beispiels die wesentlichen Schritte und die zu speichernden Informationen eines möglichen Fahrweges auf einer Zone. Die Figuren zeigen innerhalb eines Zonenrandes zeitlich nacheinander folgende Situationen der Bodenbehandlung. Das Flussdiagram der Fig. 13 fasst die für die Fahrwege minimal nötigen Kontrollen, Entscheidungen und Fahrschritte zusammen.

Am Anfang der Bodenbehandlung bzw. eines Fahrweges (Fig. 7) steht die Bodenbehandlungsmaschine auf dem ersten Knoten, der mit start bezeichnet ist. Aus der im Planungsmodus vorgegebenen Behandlungsrichtung mit vorwärts und rückwärts Orientierung ergibt sich die mit einem ausgezogenen Pfeil dargestellte Fahrrichtung. Auf dem Fahrweg müssen für Kontrollen, Entscheidungen und zu speichernde Werte Informationen zu drei nebeneinander liegenden Fahrlinien bereitgestellt werden können. Die Fahrlinien (gepunktete Linien in Fig. 7) liegen mit vorgegebenen Abständen nebeneinander und sind vorzugsweise als Geraden bzw. mit Geradengleichungen im Bodenkoordinatensystem festgelegt.

Wenn die Bodenbehandlungsmaschine im Behandlungsmodus auf einer Fahrlinie unterwegs ist, so werden diese Fahrlinie und die beidseits angeordneten Fahrlinien geordnet in der vorwärts Orientierung der Behandlungsrichtung als vorgängige, aktuelle und nächste Fahrlinie bezeichnet. Auf dem Fahrweg fährt die Bodenbehandlungsmaschine Wegsegmente auf den Fahrlinien von Anfangspunkten zu Endpunkten, wobei die Fahrrichtung der aneinander anschliessenden Wegsegmente auf verschiedenen Fahrlinien immer in entgegengesetzter Richtung festgelegt ist. Die Endpunkte werden festgelegt, wenn das Weiterfahren auf der jeweiligen Fahrlinie aufgrund eines Hindernisses nicht möglich ist. Die Anfangspunkte werden festgelegt als Punkte auf einer Fahrlinie bei der die Bodenbehandlungsmaschine mit dem Befahren eines Wegsegmentes auf dieser Fahrlinie beginnt. Durch das Speichern der Koordinaten der Anfangs- und Endpunkte kann der behandelte Bereich der Bodenfläche festgehalten werden.

Bei dem in Fig. 13 aufgeführten Initialisierungsschritt an einem ersten Knoten einer Zone "Initialize Zone" wird die Position der Bodenbehandlungsmaschine auf dem ersten Knoten kontrolliert und die vorgegebene Behandlungsrichtung abgerufen. Anschliessend wird der Ausgangspunkt als Startpunkt "Add a Start point" festgelegt und gespeichert. Ausgehend vom ersten Startpunkt wird das erste Wegsegment auf der aktuellen Fahrlinie gefahren, was in Fig. 13 mit "Lap along the Current sweepline" bezeichnet ist. Beim Auftreffen auf ein Hindernis wird ein Endpunkt auf der aktuellen Fahrlinie festgelegt und gespeichert, was in Fig. 13 mit "Add End point" und in Fig. 8 mit kreisförmigen Punkten dargestellt ist. Zum Speichern des Endpunktes gehört nebst den Koordinaten des Endpunktes auch das Bestimmen und Speichern eines der Zustände "vollständig behandelt" oder "unvollständig behandelt" und bei "unvollständig behandelt" zusätzlich das Speichern einer Richtungsinformation, wobei aus der Richtungsinformation hervorgeht, in welcher Richtung ausgehend vom entsprechenden Endpunkt unvollständig behandelte Bereiche in dieser Zone vorliegen.

Wenn in der zur aktuellen Orientierung der Behandlungsrichtung entgegengesetzten Richtung noch ein nicht behandelter Bereich der Bodenfläche angefahren werden kann, liegt die Distanz vom aktuellen Endpunkt zum nächstliegenden Anfangspunkt auf der vorgängigen Fahrlinie über einem vorgegebenen Durchfahrabstand, welcher im Wesentlichen der minimal benötigten Breite eines von der Bodenbehandlungsmaschine befahrbaren Bereichs entspricht. Ausgehend vom Endpunkt des ersten Wegsegments in Fig. 8 wird auf der vorgängigen Fahrlinie kein Anfangspunkt gefunden, weil ja die vorgängige Fahrlinie nicht befahren wurde. Der Abstand vom ersten Endpunkt zu einem nicht vorhandenen Punkt wird grösser als der vorgegebene Durchfahrabstand festgelegt und entsprechend wird zum ersten Endpunkt der Zustand "unvollständig behandelt" gespeichert mit der Angabe, dass der noch nicht behandelte Bereich vom aktuellen Endpunkt mit einer der aktuellen Orientierung der Behandlungsrichtung entgegen gesetzten Reinigungsrichtung angefahren werden muss, was in Fig. 8 mit dem nach links zeigenden punktierten Pfeil beim ersten Endpunkt dargestellt ist.

Das bei einem Endpunkt angetroffene Hindernis löst jeweils eine Konturfolgebewegung aus, die in Fig. 13 mit "Follow contour" bezeichnet ist. Die Bodenbehandlungsmaschine folgt während der Konturfolgebewegung dem Hindernis in Richtung der jeweils aktuellen Orientierung der Behandlungsrichtung, bis sie auf die aktuelle oder die nächste Fahrlinie trifft. Dies ist in Fig. 13 mit "Hit Current sweepline?" bzw. "Hit Next sweepline?" bezeichnet. Dort wo die Konturfolgebewegung auf eine noch nicht befahrene Stelle einer Fahrlinie trifft, wird ein neuer Anfangspunkt festgelegt (Fig. 13, "Add a Start point"). Wenn der neue Anfangspunkt auf der aktuellen Fahrlinie, bzw. auf der vor der Konturfolgebewegung befahrenen, Fahrlinie liegt, so wird die Fahrrichtung dieser aktuellen Fahrlinie beibehalten. Wenn der neue Anfangspunkt - bezogen auf die vor der Konturfolgebewegung befahrene Fahrlinie - auf der nächsten Fahrlinie liegt, so wird diese nächste Fahrlinie zur aktuellen Fahrlinie und die Fahrrichtung ist gegenüber der vorgängigen Fahrlinie um 180° gedreht, bzw. entgegengesetzt gerichtet. Zudem wird die Fahrlinie vor der Konturfolgebewegung zur vorgängigen Fahrlinie und eine neue nächste Fahrlinie wird bestimmt, was in Fig. 13 mit "Shift sweep lines" bezeichnet ist.

Gemäss Fig. 8 trifft die Bodenbehandlungsmachine bei den an die ersten 10 Endpunkte anschliessenden Konturfolgebewegung immer auf eine nächste Fahrlinie und entsprechend haben die aufeinander folgenden Wegsegmente auf den Fahrlinien immer entgegengesetzte Fahrrichtungen. Die Endpunkte sind zuerst durch die Berandung der Bodenfläche gegeben. Entsprechend sind die Abstände zwischen den Endpunkten und dem jeweils nächstgelegenen Anfangspunkt auf der jeweils vorgängigen Fahrlinie kleiner als der vorgegebene Durchfahrabstand, so dass an diesen Endpunkten der Zustand "vollständig behandelt" gespeichert wird. Der siebte Endpunkt ist durch ein schwarz eingezeichnetes Hindernis auf dem Innern der Bodenfläche gegeben. Bei diesem siebten Endpunkt ist der Abstand zum nächstgelegenen Anfangspunkt auf der vorgängigen Fahrlinie grösser als der vorgegebene Durchfahrabstand, was mit "Gap above threshold" bezeichnet ist. Entsprechend wird zum siebten Endpunkt der Zustand "unvollständig behandelt" gespeichert mit der Angabe, dass der noch nicht behandelte Bereich vom aktuellen Endpunkt mit einer der aktuellen Orientierung der Behandlungsrichtung entgegen gesetzten Reinigungsrichtung angefahren werden muss, was in Fig. 8 mit dem nach links zeigenden punktierten Pfeil beim siebten Endpunkt dargestellt ist.

Ausgehend vom elften Endpunkt trifft die Konturfolgebewegung nach dem schwarz eingezeichneten Hindernis wieder auf die aktuelle Fahrlinie. Das neue Wegsegment führt entsprechend auf der aktuellen Fahrlinie bis zum nächsten bzw. zwölften Endpunkt. Bei diesem zwölften Endpunkt ist der Abstand zum nächstgelegenen Anfangspunkt auf der vorgängigen Fahrlinie grösser als der vorgegebene Durchfahrabstand. Entsprechend wird zum zwölften Endpunkt der Zustand "unvollständig behandelt" mit der Richtungsinformation gemäss dem in Fig. 8 nach links zeigenden punktierten Pfeil gespeichert.

Die an den vierzehnten Endpunkt anschliessende Konturfolgebewegung trifft nur auf ein bereits behandeltes Wegsegment. Ein noch nicht befahrener Abschnitt einer Fahrlinie kann nicht gefunden werden. Daraus geht hervor, dass die erste Gruppe von nebeneinander verlaufenden Wegabschnitten abgeschlossen ist.

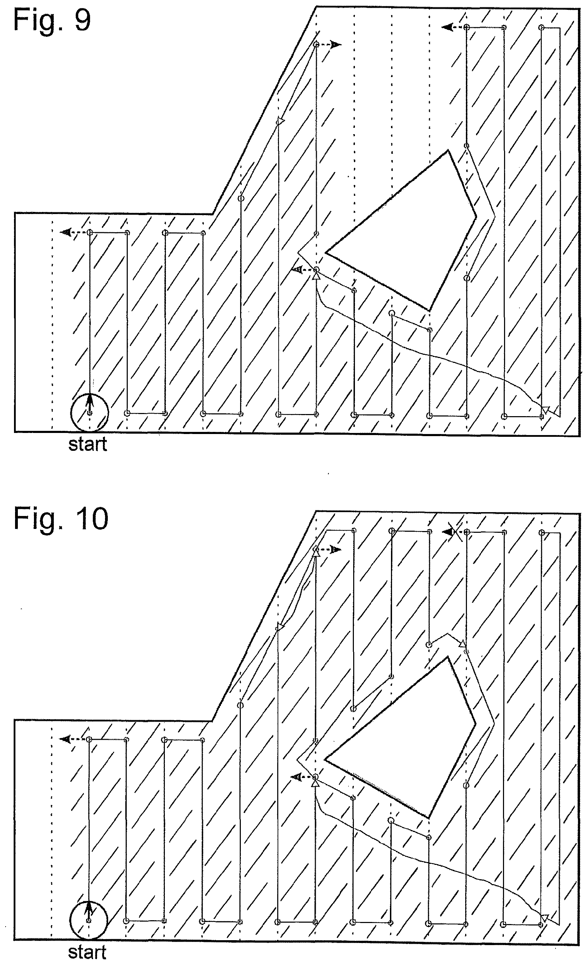

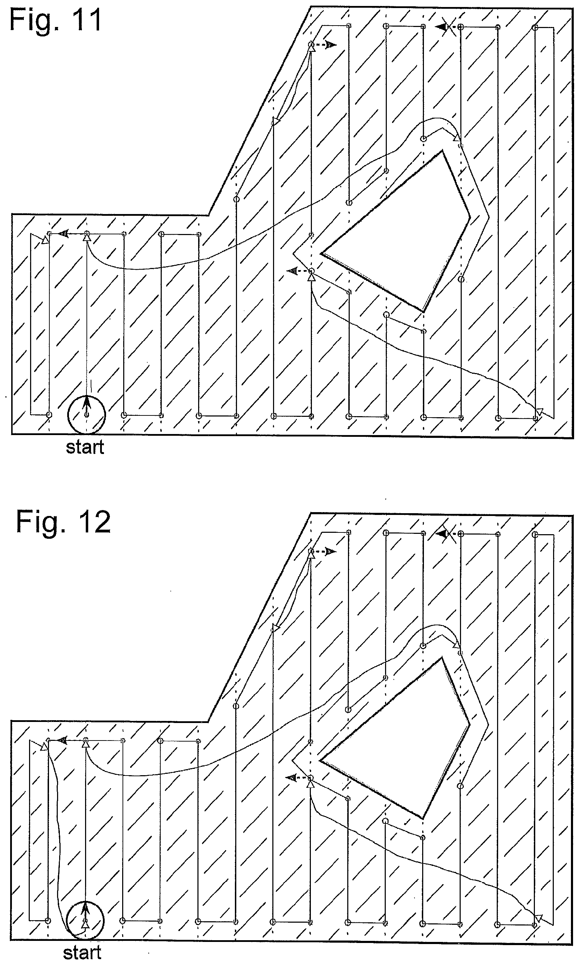

Das Befahren der weiteren Gruppen von nebeneinander verlaufenden Wegabschnitten ist in den Fig. 9 bis 12 dargestellt. In Fig. 9 ist dargestellt, wie ausgehend vom siebten Endpunkt die Konturfolgebewegung mit der nach links eingezeichneten Orientierung der Behandlungsrichtung nach dem schwarz eingezeichneten Hindernis wieder auf die aktuelle Fahrlinie trifft. Das neue Wegsegment führt entsprechend auf der aktuellen Fahrlinie bis zum nächsten Endpunkt, bei dem der Abstand zum nächstgelegenen Anfangspunkt auf der rechts liegenden bzw. vorgängigen Fahrlinie grösser ist als der vorgegebene Durchfahrabstand. Entsprechend wird zu diesem Endpunkt der Zustand "unvollständig behandelt" mit der Richtungsinformation gemäss dem in Fig. 9 nach rechts zeigenden Pfeil gespeichert. Nach der anschliessenden Konturfolgebewegung trifft die Bodenbehandlungsmachine auf ein bereits behandeltes Wegsegment und geht gemäss Fig. 10 zum nächstgelegenen Endpunkt mit dem Zustand "unvollständig behandelt". Von dort aus wird der Bereich über dem schwarz eingezeichneten Hindernis behandelt und weil die letzte Konturfolgebewegung auf eine nächste Fahrlinie, trifft die schon mit der gleichen Orientierung der Behandlungsrichtung behandelt wurde, kann gemäss Fig. 11 der Zustand des am oberen Ende liegenden Endpunkts auf "vollständig behandelt" umgestellt werden und der letzte Endpunkt mit dem Zustand "unvollständig behandelt", nämlich der erste Endpunkt, angefahren werden. Fig. 12 zeigt, dass nach der Behandlung des Bodenbereichs links vom Ausgangspunkt der Bodenbehandlung die gesamte Zone behandelt ist.

Die Positionssuchbewegungen zwischen den Gruppen von nebeneinander liegenden Wegsegmenten sind in den Fig. 9 bis 12 jeweils mit handgezeichneten Linien dargestellt. Für den anzufahrenden Punkt wird jeweils ein zweckmässiger Weg zwischen Anfangs- und Endpunkten hindurch berechnet, wobei beim Auftreffen auf Hindernisse diese umfahren werden.

Alle entstehenden Gruppen von nebeneinander verlaufenden Wegabschnitten werden nacheinander behandelt, indem immer am Ende einer solchen Gruppe ein Endpunkt mit dem Zustand "unvollständig behandelt" gesucht und mit einer Positionssuchbewegung angefahren wird. Vorzugsweise wird der nächstliegende Endpunkt mit dem Zustand "unvollständig behandelt" gewählt, was in Fig. 13 mit "Go to closest free end point" bezeichnet ist. Fig. 13 stellt diese iterative Bearbeitung mit der Bezeichnung "Is free end point left" dar. An einem Endpunkt mit dem Zustand "unvollständig behandelt" wird jeweils eine aktuelle, eine vorgängige und eine nächste Fahrlinie festgelegt (Fig. 13, "Update sweep lines") und von diesem Endpunkt aus in die zum Endpunkt gespeicherte Richtung eine neue Gruppe von nebeneinander verlaufenden Wegabschnitten in Angriff genommen bis kein Endpunkt mit dem Zustand "unvollständig behandelt" mehr vorhanden ist. Dann ist die ganze Zone behandelt und die Bodenbehandlungsmaschine geht zum ersten Knoten dieser Zone. In Fig. 13 ist dies mit ""Go to first Node" und "Zone Coverage done" bezeichnet. Der anschliessende Wechsel zum ersten Knoten einer nächsten zu behandelnden Zone ist mit "Transfer to first Node of next Zone" und mit dem danach durchgeführten "Initialize Zone" dargestellt.

Um die vollständige Behandlung einer Zone zu gewährleisten müssen nur wenige Daten, nämlich die Anfangs- und Endpunkte der befahrenen Wegsegmente und ein Behandlungszustand mit Richtungsinformation bei den Endpunkten gespeichert werden.

Zudem muss bis auf die wenigen grob zu berechnenden Positionssuchbewegungen kein Fahrweg geplant werden, was zu einem minimalen Rechenaufwand führt. Wenn eine Zone vollständig behandelt ist, erfolgt eine Fahrt zum ersten Knoten einer nächsten zu behandelnden Zone und dann die Behandlung dieser nächsten Zone.

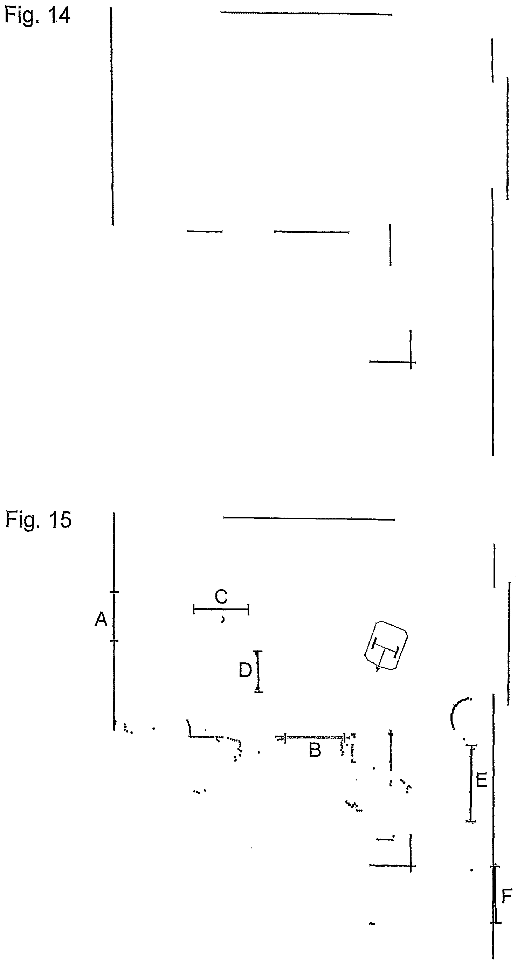

Fig. 14 und 15 stellen Schritte dar, die von einer Ausführungsform durchgeführt werden, welche auf ortsfeste Komponenten der Positions- und Ausrichtungs-Erfassungseinrichtung verzichtet. Der Bodenfläche sind einzelne feste Elemente, wie die Bodenfläche berandende Wandabschnitte oder auf der Bodenfläche angeordnete Elemente, Säulen, innere Wandabschnitte oder feste Regale zugeordnet, welche als Positionierungsbereiche verwendet werden.

Um eine Positions- und Ausrichtungsbestimmung zu ermöglichen, umfasst die Steuerung der Bodenbehandlungsmaschine einen Erfassungsmodus, bei dem aus Distanzmessungen des Scan-Sensors und Fahrinformationen der Antriebsräder die in Fig. 14 auf einem der Bodenfläche zugeordneten Boden-Koordinatensystem dargestellten Positionierungsbereiche bestimmt werden. Bevor eine Bodenfläche von der Bodenbehandlungsmaschine behandelt werden kann, muss die Bodenbehandlungsmaschine im Erfassungsmodus über verschiedene Bereiche der Bodenfläche geführt werden, damit sie Positionierungsbereiche erfassen kann. Zum Erfassen der Positionierungsbereiche bestimmt der Erfassungsmodus Liniensegmente im Boden-Koordinatensystem, wobei die bestimmten Liniensegmente gemessene Distanzpunkte an den Positionierungsbereichen mit Parametern von Kurvengleichungen, vorzugsweise Geraden, als Abschnitte von kontinuierlichen Linien darstellen. Die dargestellten Abschnitte von Geraden können mit Winkeln zu einer Koordinatenachse und mit einer Positionsangabe sowie einer Längenangabe oder auch mit den Koordinaten der Endpunkte festgelegt werden.

Fig. 15 zeigt die Überlagerung von erfassten Positionierungsbereichen mit den für eine aktuelle Position erfassten Distanzmessungen des Scan-Sensors, wobei Distanzpunkte, die auf einer Linie, insbesondere einer Geraden liegen, mit Linienabschnitten A, B, C, D, E und F dargestellt sind. Aus der dargestellten Übereinstimmung der Linienabschnitten A, B und F mit Positionierungsbereichen kann im Behandlungsmodus die Position und Ausrichtung der Bodenbehandlungsmaschine im Boden-Koordinatensystem bestimmt werden. Die Linienabschnitte C, D und E stammen von variablen Elementen (Hindernissen), die bei der Durchführung des Erfassungsmodus nicht vorhanden waren. Gegebenenfalls werden für die Bestimmung einer aktuellen Position und Ausrichtung der Bodenbehandlungsmaschine auch Fahrinformationen der Antriebsräder verwendet. Alle Informationen die zur Positionsbestimmung verwendet werden können, werden vorzugsweise mittels Karman-Filtertechnik zu einer Positions- und Ausrichtungsbestimmung mit Fehlerabschätzung umgerechnet. Ausgehend von einer genauen Positionsbestimmung, die aus einer guten Übereinstimmung von beispielsweise mindestens zwei Positionierungsbereichen und den für eine aktuelle Position erfassten entsprechenden Distanzmessungen hervorgeht, kann mit der Verfolgung des Fahrweges, bzw. mit der Fahrinformation der Antriebsräder, auch auf der Weiterfahrt eine relativ genaue Position und Ausrichtung bestimmt werden, selbst wenn auf der Weiterfahrt keine Positionierungsbereiche sichtbar sind.

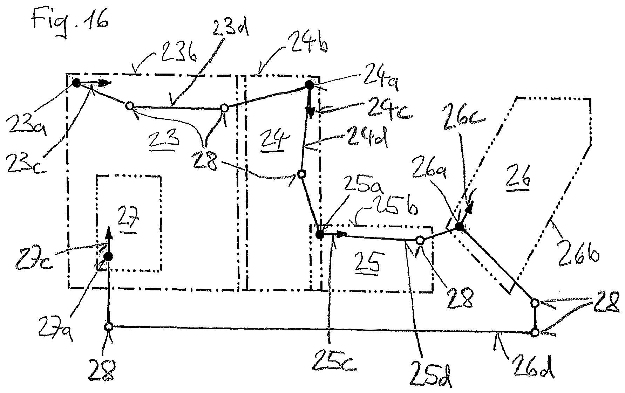

Fig. 16 zeigt einen im Planungsmodus erstellten Plan mit fünf Zonen 23-27. In jeder Zone 23-27 ist ein erster Knoten 23a-27a angeordnet. Die Zonenränder 23b-27b sind sind entsprechend der Reihenfolge der Zonen 23-27 mit einem bis fünf Punkten gekennzeichnet und müssen zumindest dort festgelegt werden, wo sie nicht von einer Wand oder einem anderen Hindernis gebildet sind. Von den Zonenrändern 23b-27b ist zumindest je ein Bereich als virtuelles Hindernis einsetzbar, so dass im Behandlungsmodus eine direkte Verbindung zwischen dem ersten Knoten einer Zone und dem ersten Knoten einer anderen Zone vom eingegebenen Bereich des Zonenrandes aufgrund realer und virtueller Hindernisse unterbrochen ist, bis die Zone vollständig behandelt ist. Dann kann zumindest in einem Bereich des Zonenrandes das virtuelle Hindernis aufgehoben werden und die Behandlungsmaschine kann durch diesen Bereich zum ersten Knoten einer anderen Zone gelangen.

Die Zonen-Paare 23 und 24 sowie 24 und 25 sind je bei einem Rand etwas überlappend festgelegt. Beim Überlappungsbereich liegt beispielsweise der Zonenrand 24b in der Zone 23 und der Zonenrand 23b in der Zone 24. Die Zone 27 liegt vollständig innerhalb der Zone 23. Die Zone 26 ist von allen anderen Zonen 23, 24, 25 und 27 beabstandet. Weil jeweils von den virtuellen Hindernissen nur diejenigen der aktuell bearbeiteten Zone wirksam sind, können die Zonenränder anderer Zonen überfahren werden. Dies stellt bei überlappenden Zonen sicher, dass im Bereich von überlappenden Ränder eine vollständige Behandlung gewährleistet werden kann, bzw. dass keine unbehandelten schmalen Streifen entstehen.

Im Planungsmodus wird jedem ersten Knoten und damit der Zone, in welcher der erste Knoten angeordnet ist, eine Behandlungsrichtung zugeordnet. Aus der Behandlungsrichtung können die senkrecht dazu verlaufenden, voneinander beabstandeten Fahrlinien abgeleitet werden, wobei die Fahrrichtungen auf benachbarten Fahrlinien entgegengesetzt ausgerichtet sind. In Fig. 16 sind bei den ersten Knoten aus den Behandlungsrichtungen abgeleitete Fahrrichtungen 23c-26c und 27c eingezeichnet, gemäss denen im Behandlungsmodus von den ersten Knoten losgefahren wird. Die Festlegung der Behandlungsrichtungen entspricht somit der Festlegung der Fahrrichtungen 23c-27c bei den ersten Knoten und der Information, ob die Behandlungsrichtung am Anfang der Zonenbehandlung relativ zur Fahrtrichtung bei den ersten Knoten nach rechts oder nach links gerichtet ist. Die Vorgabe der Zonenränder, der Positionen der ersten Knoten der Zonen und der dazugehörigen Behandlungsrichtungen bzw. Fahrrichtungen ermöglichen die Behandlung aller Zonen, ohne dass eine Bedienungsperson beim Start in einer anderen Zone anwesend sein muss.

Die Verbindungswege 23d-26d zum ersten Konten 24a-27a einer jeweils nachfolgenden Zone gehen vom ersten Knoten der jeweils aktuellen Zone aus und durchqueren je einen Bereich der Zonenränder der beiden aufeinanderfolgenden Zonen. Wenn die direkte Verbindung zwischen dem ersten Knoten einer aktuellen Zone und dem ersten Knoten einer nächsten Zone nicht einfach fahrbar ist, so kann im Planungsmodus mindestens ein weiterer Knoten 28 auf dem Weg zwischen zwei ersten Knoten festgelegt werden. Wenn mehr als ein weiterer Knoten 28 festgelegt wird, so wird den weiteren Knoten 28 eine Reihenfolge zugeordnet, in welcher sie abgefahren werden. Der Behandlungsmodus führt den Wechsel von der aktuellen Zone zu einer nächsten Zone mittels einer Fahrt der Bodenbehandlungsmaschine über den mindestens einen weiteren Knoten 28 durch. Mit der Festlegung von weiteren Knoten und einer Reihenfolge, gemäss welcher sie angefahren werden, können auch längere oder schwierigere Wege zu einer anderen Zone ermöglicht werden. Gemäss Fig. 16 verläuft der Weg von der Zone 26 ausserhalb aller zu behandelnden Zonen beispielsweise in einem Korridor zur Zone 27. Wenn bei einem weiteren Knoten 28 gegebenenfalls das Öffnen einer Tür oder eine Fahrt mit einem Aufzug ausgelöst werden soll, so kann dem weiteren Knoten 28 dazu die nötige Information zugeordnet werden, welche dazu führt, dass die Behandlungsmaschine ein Signal abgibt und durch die Tür oder in den Aufzug fährt, sobald dies möglich ist.

## Patentansprüche

1. Bodenbehandlungsmaschine (1) zum Behandeln von Bodenflächen, mit einem Gehäuse (2), zwei Antriebsrädern (3), mindestens einem Stützrad (4), einer Antriebsvorrichtung (5), einer Steuerung (6), mindestens einer Hindernis-Erkennungseinrichtung und mit einer Bodenbehandlungseinrichtung (9), die in einem Behandlungsbereich mit einer vorgegebenen Lage relativ zu den Rädern (3, 4) sowie mit einer Behandlungsbreite senkrecht zur Fahrrichtung eine Behandlung des Bodens erzielbar macht, wobei die Steuerung (6) einen Behandlungsmodus aufweist,
der Behandlungsmodus auf einer zu behandelnden Fläche mit dem Behandlungsbereich der Bodenbehandlungsmaschine (1) Gruppen von nebeneinander verlaufenden Fahrlinien überstreichbar macht, wobei
eine Behandlungsrichtung mit vorwärts und rückwärts Orientierung senkrecht zu den Wegabschnitten ausgerichtet ist,
die Position und Ausrichtung der Bodenbehandlungsmaschine (1) im Boden-Koordinatensystem von einer Positions-Erfassungseinrichtung bereitgestellt werden,
auf den Fahrlinien Wegsegmente von Anfangspunkten zu Endpunkten jeweils in einer Fahrrichtung fahrbar sind,
die Fahrrichtungen auf benachbarten Fahrlinien je entgegengesetzt ausgerichtet sind,
die Endpunkte dadurch festlegt sind, dass das Weiterfahren auf der jeweiligen Fahrlinie aufgrund eines von der Hindernis-Erkennungseinrichtung erfassten realen oder virtuellen Hindernisses nicht möglich ist,
zu den Endpunkten jeweils der Anfangspunkt sowie der Endpunkt des abgefahrenen Wegsegmentes, zumindest einer der Zustände "vollständig behandelt" oder "unvollständig behandelt" und zumindest bei "unvollständig behandelt" auch eine Richtungsinformation in einem Wegsegmentspeicher gespeichert werden, wobei aus der Richtungsinformation hervorgeht in welcher Orientierung der Behandlungsrichtung ausgehend vom entsprechenden Endpunkt unvollständig behandelte Bereiche vorliegen, und
bei den Endpunkten zum Finden jeweils neuer Anfangspunkte eine Konturfolgebewegung auslösbar ist, bei der die Bodenbehandlungsmaschine dem Hindernis folgt, bis sie auf eine Fahrlinie trifft, wobei
die Konturfolgebewegung in Richtung der jeweils aktuellen Orientierung der Behandlungsrichtung beginnt,
beim Treffen der vor der Konturfolgebewegung befahrenen Fahrlinie auf einem gemäss Wegsegmentspeicher noch nicht abgefahrenen Wegsegment dort ein neuer Anfangspunkt festgelegt sowie die Fahrrichtung dieser Fahrlinie gewählt werden,
beim Treffen einer benachbarten Fahrlinie auf einem gemäss Wegsegmentspeicher noch nicht abgefahrenen Wegsegment dort ein neuer Anfangspunkt festgelegt sowie die Fahrrichtung dieser benachbarten Fahrlinie gewählt werden,
beim Treffen einer Fahrlinie auf einem gemäss Wegsegmentspeicher bereits abgefahrenen Wegsegment das Ende einer Gruppe von nebeneinander verlaufenden Wegabschnitten festgestellt wird, wobei die Steuerung (6) dann im Wegsegmentspeicher einen Endpunkt mit dem Zustand "unvollständig behandelt" sucht und mit einer Positionssuchbewegung anfährt, um von diesem Endpunkt aus in die zum Endpunkt gespeicherte Orientierung der Behandlungsrichtung eine neue Gruppe von nebeneinander verlaufenden Wegabschnitten in Angriff zu nehmen bis kein Endpunkt mit dem Zustand "unvollständig behandelt" mehr vorhanden ist,
**dadurch gekennzeichnet, dass**
die Steuerung (6) einen Planungsmodus umfasst, welcher auf einer zu behandelnden Bodenfläche mindestens zwei Zonen (23-27), in jeder Zone (23-27) einen ersten Knoten (23a-27a) und von mindestens einer Zone (23-27) einen Verbindungsweg (23d-27d) zu einem ersten Konten (23a-27a) einer anderen Zone festlegbar macht, wobei zum Festlegen einer Zone (23-27) zumindest ein Bereich ihres Zonenrandes (23b-27b) als virtuelles Hindernis eingebbar ist, so dass eine direkte Verbindung zwischen dem ersten Knoten (23a-27a) der festgelegten Zone (23-27) und dem ersten Knoten (23a-27a) einer anderen Zone (23-27) vom eingegebenen Bereich des Zonenrandes (23b-27b) aufgrund realer und virtueller Hindernisse unterbrochen ist, und
der Behandlungsmodus einen Wechsel der Bodenbehandlungsmaschine (1) von einer unter Behandlung stehenden aktuellen Zone (23-27) zu einer anderen zu behandelnden Zone (23-27) aufgrund realer und virtueller Hindernisse verhindert und eine Fahrt von dieser aktuellen Zone (23-27) zum ersten Knoten (23a-27a) der anderen zu behandelnden Zone (23-27) durch die Aufhebung der Wirkung eines als virtuelles Hindernis des zwischen den ersten Knoten (23a-27a) der beiden Zonen (23-27) angeordneten Bereichs des Zonenrandes (23b-27b) der aktuellen Zone (23-27) erst zulässt, wenn in der aktuellen Zone (23-27) nach dem Befahren dieser Zone (23-27) kein Endpunkt mit dem Zustand "unvollständig behandelt" mehr vorhanden ist, wobei nach dem Erreichen des ersten Knotens (23a-27a) der anderen zu behandelnden Zone (23-27) mindestens ein Bereich des Zonenrandes (23b-27b) der anderen zu behandelnden Zone (23-27) als virtuelles Hindernis eingesetzt wird, so dass ein Austritt aus der zu behandelnden Zone (23-27) bis zu deren vollständigen Behandlung verhindert wird.

2. Bodenbehandlungsmaschine (1) nach Anspruch 1, **dadurch gekennzeichnet, dass** der Planungsmodus sowohl voneinander beabstandete, aneinander angrenzende und auch überlappende Zonen (23-27) festlegbar macht, wobei zu jeder Zone (23-27) zumindest ein Bereich ihres Zonenrandes (23b-27b), vorzugsweise auch der gesamte Zonenrand (23b-27b), als virtuelles Hindernis eingebbar ist und jeweils von den virtuellen Hindernissen nur diejenigen der aktuell bearbeiteten Zone (23-27) wirksam sind und somit Zonenränder (23b-27b) anderer Zonen (23-27) überfahrbar sind.

3. Bodenbehandlungsmaschine (1) nach Anspruch 1 oder 2, **dadurch gekennzeichnet, dass** der Planungsmodus jedem ersten Knoten (23a-27a) und damit der Zone (23-27), welcher der erste Knoten (23a-27a) zugeordnet ist, eine Behandlungsrichtung zuordnen lässt, welche für den Behandlungsmodus in der entsprechenden Zone (23-27) vorgegeben ist.

4. Bodenbehandlungsmaschine (1) nach einem der Ansprüche 1 bis 3, **dadurch gekennzeichnet, dass** im Behandlungsmodus die Bodenbehandlungsmaschine (1) zum ersten Knoten (23a-27a) einer aktuellen Zone (23-27) bewegt wird, wenn in der aktuellen Zone (23-27) nach dem Befahren dieser Zone (23-27) kein Endpunkt mit dem Zustand "unvollständig behandelt" mehr vorhanden ist, und entsprechend der Wechsel von der aktuellen Zone (23-27) zu einer anderen Zone mittels einer Fahrt der Bodenbehandlungsmaschine (1) vom ersten Knoten (23a-27a) der aktuellen Zone (23-27) zum ersten Knoten (23a-27a) einer anderen Zone (23-27) durchgeführt wird, wobei auf der Fahrt zwischen diesen beiden ersten Knoten (23a-27a) die Bodenbehandlungseinrichtung (9) in einem angehobenen Zustand zu bringen ist.

5. Bodenbehandlungsmaschine (1) nach Anspruch 4, **dadurch gekennzeichnet, dass** der Planungsmodus mindestens einen weiteren Knoten (28) und dessen Reihenfolge auf dem Weg zwischen zwei ersten Knoten (23a-27a) festlegbar macht und der Behandlungsmodus den Wechsel von der aktuellen Zone (23-27) zu einer anderen Zone (23-27) mittels einer Fahrt der Bodenbehandlungsmaschine (1) über den mindestens einen weiteren Knoten (28) gemäss dessen Reihenfolge durchführbar macht.

6. Bodenbehandlungsmaschine (1) nach Anspruch 5, **dadurch gekennzeichnet, dass** der mindestens eine weitere Knoten (28) auf einen Durchgangsweg vorzugsweise ausserhalb aller zu behandelnden Zonen (23-27) legbar ist und der Behandlungsmodus bei diesem weiteren Knoten (28) gegebenenfalls das Öffnen einer Tür oder das Auslösen einer Fahrt mit einem Aufzug erzielbar macht.

7. Bodenbehandlungsmaschine (1) nach einem der Ansprüche 4 bis 6, **dadurch gekennzeichnet, dass** der Planungsmodus einem Wechselweg zwischen zwei ersten Knoten (23a-27a) eine oder beide Verbindungsrichtungen zuordnen lässt und der Behandlungsmodus den Wechselweg entsprechend in einer oder in beiden Verbindungsrichtungen durchführbar macht.

8. Bodenbehandlungsmaschine (1) nach nach einem der Ansprüche 1 bis 7, **dadurch gekennzeichnet, dass** der Behandlungsmodus den einem aktuellen Endpunkt zuzuordnenden Zustand "vollständig behandelt" oder "unvollständig behandelt" anhand der Distanz vom aktuellen Endpunkt zum nächstgelegenen Anfangspunkt auf einer Fahrlinie, die in der zur aktuellen Orientierung der Behandlungsrichtung entgegengesetzten Orientierung direkt neben der Fahrlinie mit dem aktuellen Endpunkt liegt, bestimmbar macht, wobei bei einem Abstand über einem vorgegebenen Wert der Zustand "unvollständig behandelt" gewählt wird.

9. Bodenbehandlungsmaschine (1) nach einem der Ansprüche 1 bis 8, **dadurch gekennzeichnet, dass** die Bodenbehandlungseinrichtung (9) eine Reinigungseinrichtung ist, vorzugsweise mit mindestens einer Bürste (9a), einer Reinigungsflüssigkeitszuführung und einer Absauganordnung (12), gegebenenfalls aber mit einem Trockensauger, oder einem Sprühextraktionsgerät oder einer Kehrmaschine.

10. Verfahren zum Behandeln von Bodenflächen, mit einer Bodenbehandlungsmaschine (1) mit einem Gehäuse (2), zwei Antriebsrädern (3), mindestens einem Stützrad (4), einer Antriebsvorrichtung (5), einer Steuerung (6), mindestens einer Hindernis-Erkennungseinrichtung und mit einer Bodenbehandlungseinrichtung (9), die in einem Behandlungsbereich mit einer vorgegebenen Lage relativ zu den Rädern (3, 4) sowie mit einer Behandlungsbreite senkrecht zur Fahrrichtung eine Behandlung des Bodens erzielbar macht, wobei in einem Behandlungsmodus auf einer zu behandelnden Fläche mit dem Behandlungsbereich der Behandlungsmaschine Gruppen von nebeneinander verlaufenden Fahrlinien überstrichen werden und dabei
eine Behandlungsrichtung mit vorwärts und rückwärts Orientierung senkrecht zu den Wegabschnitten ausgerichtet ist,
die Position und Ausrichtung der Bodenbehandlungsmaschine im Boden-Koordinatensystem von einer Positions-Erfassungseinrichtung bereitgestellt werden,
auf den Fahrlinien Wegsegmente von Anfangspunkten zu Endpunkten jeweils in einer Fahrrichtung gefahren werden,
die Fahrrichtungen auf benachbarten Fahrlinien je entgegengesetzt ausgerichtet sind,
die Endpunkte dadurch festlegt werden, dass das Weiterfahren auf der jeweiligen Fahrlinie aufgrund eines von der Hindernis-Erkennungseinrichtung erfassten realen oder virtuellen Hindernisses nicht möglich ist,
zu den Endpunkten jeweils der Anfangspunkt sowie der Endpunkt des abgefahrenen Wegsegmentes, zumindest einer der Zustände "vollständig behandelt" oder "unvollständig behandelt" und zumindest bei "unvollständig behandelt" auch eine Richtungsinformation in einem Wegsegmentspeicher gespeichert werden, wobei aus der Richtungsinformation hervorgeht in welcher Orientierung der Behandlungsrichtung ausgehend vom entsprechenden Endpunkt unvollständig behandelte Bereiche vorliegen, und
bei den Endpunkten zum Finden jeweils neuer Anfangspunkte eine Konturfolgebewegung ausgelöst wird, bei der die Bodenbehandlungsmaschine dem Hindernis folgt, bis sie auf eine Fahrlinie trifft, wobei
die Konturfolgebewegung in Richtung der jeweils aktuellen Orientierung der Behandlungsrichtung beginnt,
beim Treffen der vor der Konturfolgebewegung befahrenen Fahrlinie auf einem gemäss Wegsegmentspeicher noch nicht abgefahrenen Wegsegment dort ein neuer Anfangspunkt festgelegt sowie die Fahrrichtung dieser Fahrlinie gewählt werden,
beim Treffen einer benachbarten Fahrlinie auf einem gemäss Wegsegmentspeicher noch nicht abgefahrenen Wegsegment dort ein neuer Anfangspunkt festgelegt sowie die Fahrrichtung dieser benachbarten Fahrlinie gewählt werden,
beim Treffen einer Fahrlinie auf einem gemäss Wegsegmentspeicher bereits abgefahrenen Wegsegment das Ende einer Gruppe von nebeneinander verlaufenden Wegabschnitten festgestellt wird, wobei die Steuerung dann im Wegsegmentspeicher einen Endpunkt mit dem Zustand "unvollständig behandelt" sucht und mit einer Positionssuchbewegung anfährt, um von diesem Endpunkt aus in die zum Endpunkt gespeicherte Orientierung der Behandlungsrichtung eine neue Gruppe von nebeneinander verlaufenden Wegabschnitten in Angriff zu nehmen bis kein Endpunkt mit dem Zustand "unvollständig behandelt" mehr vorhanden ist,
**dadurch gekennzeichnet, dass**
in einem Planungsmodus auf einer zu behandelnden Bodenfläche mindestens zwei Zonen (23-27), in jeder Zone (23-27) ein erster Knoten (23a-27a) und von mindestens einer Zone (23-27) ein Verbindungsweg (23d-27d) zu einem ersten Konten (23a-27a) einer anderen Zone (23-27) festlegt werden, wobei zum Festlegen einer Zone (23-27) zumindest ein Bereich ihres Zonenrandes (23b-27b) als virtuelles Hindernis eingegeben wird, so dass eine direkte Verbindung zwischen dem ersten Knoten (23a-27a) der festgelegten Zone (23-27) und dem ersten Knoten (23a-27a) einer anderen Zone (23-27) vom eingegebenen Bereich des Zonenrandes (23b-27b) während der Behandlung der festgelegten Zone (23-27) aufgrund realer und virtueller Hindernisse unterbrochen ist, und
im Behandlungsmodus ein Wechsel der Bodenbehandlungsmaschine (1) von einer unter Behandlung stehenden aktuellen Zone (23-27) zu einer anderen zu behandelnden Zone (23-27) aufgrund realer und virtueller Hindernisse verhindert wird und eine Fahrt von dieser aktuellen Zone (23-27) zum ersten Knoten (23a-27a) der anderen zu behandelnden Zone (23-27) durch die Aufhebung der Wirkung des als virtuelles Hindernis des zwischen den ersten Knoten (23a-27a) der beiden Zonen (23-27) angeordneten Bereichs des Zonenrandes (23b-27b) der aktuellen Zone (23-27) erst zugelassen wird, wenn in der aktuellen Zone (23-27) nach dem Befahren dieser Zone (23-27) kein Endpunkt mit dem Zustand "unvollständig behandelt" mehr vorhanden ist, wobei nach dem Erreichen des ersten Knotens (23a-27a) der anderen zu behandelnden Zone (23-27) mindestens ein Bereich des Zonenrandes (23b-27b) der anderen zu behandelnden Zone (23-27) als virtuelles Hindernis eingesetzt wird, so dass ein Austritt aus der zu behandelnden Zone (23-27) bis zu deren vollständigen Behandlung verhindert wird.

11. Verfahren nach Anspruch 10, **dadurch gekennzeichnet, dass** im Planungsmodus voneinander beabstandete und/oder aneinander angrenzende und/oder überlappende Zonen (23-27) festgelegt werden, wobei zu jeder Zone (23-27) zumindest ein Bereich ihres Zonenrandes (23b-27b), vorzugsweise auch der gesamte Zonenrand (23b-27b), als virtuelles Hindernis eingegeben wird und jeweils nur die virtuellen Hindernisse der aktuell bearbeiteten Zone (23-27) wirksam sind und somit Zonenränder (23b-27b) anderer Zonen (23-27) überfahren werden können.

12. Verfahren nach Anspruch 10 oder 11, **dadurch gekennzeichnet, dass** im Planungsmodus jedem ersten Knoten (23a-27a) und damit der Zone (23-27), welcher der erste Knoten (23a-27a) zugeordnet ist, eine Behandlungsrichtung zugeordnet wird, welche für den Behandlungsmodus in der entsprechenden Zone (23-27) vorgegeben wird.

13. Verfahren nach einem der Ansprüche 10 bis 12, **dadurch gekennzeichnet, dass** im Behandlungsmodus der einem aktuellen Endpunkt zuzuordnenden Zustand "vollständig behandelt" oder "unvollständig behandelt" anhand der Distanz vom aktuellen Endpunkt zum nächstgelegenen Anfangspunkt auf einer Fahrlinie, die in der zur aktuellen Orientierung der Behandlungsrichtung entgegengesetzten Orientierung direkt neben der Fahrlinie mit dem aktuellen Endpunkt liegt, bestimmt wird, wobei bei einem Abstand über einem vorgegebenen Wert der Zustand "unvollständig behandelt" gewählt wird.

14. Computerprogrammprodukt, welches die Durchführung eines Verfahrens nach einem der Ansprüche 10 bis 13 auf einer programmgesteuerten Bodenbehandlungsmaschine (1) veranlasst.

## Claims

1. A floor treatment machine (1) for treating floor surfaces, comprising a housing (2), two drive wheels (3), at least one support wheel (4), a drive device (5), a controller (6), at least one obstacle-recognizing device and comprising a floor treatment device (9), which ensures that the floor can be treated in a treatment area comprising a predetermined location relative to the wheels (3, 4), as well as comprising a treatment width perpendicular to the driving direction, wherein the controller (6) encompasses a treatment mode,
the treatment mode ensures that on a surface, which is to be treated, groups of driving lines which run next to one another can be swept over by means of the treatment area of the floor treatment machine (1), wherein
a treatment direction with a forwards and backwards orientation is aligned perpendicularly to the route sections
the position and alignment of the floor treatment machine (1) in the floor coordinate system is provided by a position detection device,
route segments on the driving lines can be driven from starting points to end points each in one driving direction,
the driving directions on adjacent driving lines are each oriented in opposite directions,
the end points are established in that driving cannot be continued on the respective driving line due to a real or virtual obstacle, which is detected by the obstacle recognition device,
for the end points in each case the starting point as well as the end point of the route segment, which was followed, at least one of the states "completely treated" or "incompletely treated" and also a direction information, at least in the case of "incompletely treated" are stored in a route segment storage, wherein it becomes clear from the direction information, in which orientation of the treatment direction incompletely treated areas are present, starting at the corresponding end point, and
a contour-following movement, in response to which the floor treatment machine follows the obstacle until it encounters a driving line, can be triggered at the end points for finding new starting points in each case, wherein
the contour-following movement starts in the direction of the respective current orientation of the treatment direction,
when encountering the driving line, which was followed prior to the contour-following movement, on a route segment, which, according to the route segment storage, has not yet been followed, a new starting point is established at that location and the driving direction of this driving line is chosen,
when encountering an adjacent driving line on a route segment, which, according to the route segment storage, has not yet been followed, a new starting point is established at that location and the driving direction of this adjacent driving line is chosen,
when encountering a driving line on a route segment, which, according to the route segment storage, has already been followed, the end of a group of route segments, which run next to one another, is established, wherein the controller (6) then looks for an end point comprising the state "incompletely treated" in the route segment storage and approaches it with a position search movement, so as to tackle a new group of route sections, which run next to one another, starting at this end point in the orientation of the treatment direction stored for this end point, until no end point comprising the state "incompletely treated" is current any longer,
**characterized in that**
the controller (6) comprises a planning mode which enables, on a floor surface to be treated, determination of at least two zones (23-27), in each zone (23-27) a first node (23a-27a), and a connection route (23d-27d) from at least one zone (23-27) to a first node (23a-27a) of another zone, wherein to determine a zone (23-27), at least one section of its zone boundary (23b-27b) can be entered as a virtual obstacle, so that a direct connection between the first node (23a-27a) of the established zone (23-27) and the first node (23a-27a) of another zone (23-27) is interrupted by the entered section of the zone boundary (23b-27b) because of real and virtual obstacles, and
the treatment mode prevents a change of the floor treatment machine (1) from the current zone (23-27) under treatment to another zone (23-27) to be treated because of real and virtual obstacles and only permits a drive from this current zone (23-27) to the first node (23a-27a) of the other zone (23-27) to be treated by canceling the effect of a region of the zone boundary (23b-27b) of the current zone (23-27) arranged as a virtual obstacle between the first nodes (23a-27a) of the two zones (23-27) when an end point having the state "incompletely treated" is no longer present in the current zone (23-27) after passing over this zone (23-27), wherein after reaching the first node (23a-27a) of the other zone (23-27) to be treated, at least one region of the zone boundary (23b-27b) of the other zone (23-27) to be treated is entered as a virtual obstacle, so that an exit from the zone (23-27) to be treated is prevented until it is completely treated.

2. The floor treatment machine (1) according to claim 1, **characterized in that** the planning mode enables determination of zones (23-27) spaced apart from one another, adjoining one another, and also overlapping, wherein at least one region of its zone boundary (23b-27b), preferably also the entire zone boundary (23b-27b), can be entered as a virtual obstacle for each zone (23-27) and in each case only the virtual obstacles of the presently processed zone (23-27) are active and therefore zone boundaries (23b-27b) of other zones (23-27) can be passed over.

3. The floor treatment machine (1) according to claim 1 or 2, **characterized in that** the planning mode allows a treatment direction, which is specified for the treatment mode in the corresponding zone (23-27), to be assigned to each first node (23a-27a) and thus to the zone (23-27) which is associated with the first node (23a-27a).

4. The floor treatment machine (1) according to any one of claims 1 to 3, **characterized in that** in the treatment mode, the floor treatment machine (1) is moved to the first node (23a-27a) of a current zone (23-27) if an end point having the state "incompletely treated" is no longer present in the current zone (23-27) after passing over this zone (23-27) and accordingly the change from the current zone (23-27) to another zone is carried out by means of driving the floor treatment machine (1) from the first node (23a-27a) of the current zone (23-27) to the first node (23a-27a) of another zone (23-27), wherein the floor treatment device (9) is to be moved into a raised state during the drive between these two first nodes (23a-27a).

5. The floor treatment machine (1) according to claim 4, **characterized in that** the planning mode enables at least one further node (28) and its sequence on the route between two first nodes (23a-27a) to be determined and the treatment mode enables the change from the current zone (23-27) to another zone (23-27) to be carried out by means of a drive of the floor treatment machine (1) via the at least one further node (28) according to this sequence.

6. The floor treatment machine (1) according to claim 5, **characterized in that** the at least one further node (28) can be located on a passage route preferably outside all zones (23-27) to be treated and the treatment mode enables the opening of a door or the triggering of travel using an elevator to be achieved if necessary at this further node (28).

7. The floor treatment machine (1) according to any one of claims 4 to 6, **characterized in that** the planning mode permits a change route between two first nodes (23a-27a) to be associated with one or both connection directions and the treatment mode enables the change route to be carried out accordingly in one or both connection directions.

8. The floor treatment machine (1) according to any one of claims 1 to 7, **characterized in that** the treatment mode ensures that the state "completely treated" or "incompletely treated", which is assigned to a current end point, can be determined by means of the distance from the current end point to the closest starting point on a driving line, which is located in the orientation, which is opposite to the current orientation of the treatment direction, directly next to the driving line comprising the current end point, wherein the state "incompletely treated" is chosen in the case of a distance above a predetermined value.

9. The floor treatment machine (1) according to any one of claims 1 to 8, **characterized in that** the floor treatment device (9) is a cleaning device, preferably comprising at least one brush (9a), a cleaning liquid supply and a suction arrangement (12), but if necessary comprising a dry vacuum, or a spray suction device or a sweeper.

10. A method for treating floor surfaces by means of a floor treatment machine (1), comprising a housing (2), two drive wheels (3), at least one support wheel (4), a drive device (5), a controller (6), at least one obstacle-recognizing device and comprising a floor treatment device (9), which ensures that the floor can be treated in a treatment area comprising a predetermined location relative to the wheels (3, 4), as well as comprising a treatment width perpendicular to the driving direction, wherein in a treatment mode on a surface, which is to be treated, groups of driving lines, which run next to one another, are swept over by means of the treatment area of the treatment machine and at the same time
a treatment direction with forwards and backwards orientation is aligned perpendicularly to the route sections,
the position and alignment of the floor treatment machine in the floor coordinate system are provided by a position detection device,
route segments on the driving lines are driven from starting points to end points each in one driving direction,
the driving directions on adjacent driving lines are oriented in opposite directions,
the end points are established in that driving cannot be continued on the respective driving line due to a real or virtual obstacle, which is detected by an obstacle recognition device,
for the end point the starting point as well as the end point of the route segment, which was followed, , at least one of the states "completely treated" or "incompletely treated" and at least in the case of "incompletely treated" also a direction information are stored in a route segment storage , wherein it becomes clear from the direction information, in which orientation of the treatment direction incompletely treated areas are present, starting at the corresponding end point, and
a contour-following movement, in response to which the floor treatment machine follows the obstacle until it encounters a driving line, is triggered at the end points for finding new starting points in each case, wherein
the contour-following movement starts in the direction of the respective current orientation of the treatment direction,
when encountering the driving line, which was followed prior to the contour-following movement, on a route segment, which, according to the route segment storage, has not yet been followed, a new starting point is established at that location and the driving direction of this driving line is chosen,
when encountering an adjacent driving line on a route segment, which, according to the route segment storage, has not yet been followed, a new starting point is established at that location and the driving direction of this adjacent driving line is chosen,
when encountering a driving line on a route segment, which, according to the route segment storage, has already been followed, the end of a group of route segments, which run next to one another, is established, wherein the controller then looks for an end point comprising the state "incompletely treated" in the route segment storage and approaches it with a position search movement, so as to tackle a new group of route sections, which run next to one another, starting at this end point in the orientation of the treatment direction stored for this end point, until no end point comprising the state "incompletely treated" is current any longer,
**characterized in that**
in a planning mode, on a floor surface to be treated, at least two zones (23-27), in each zone (23-27) a first node (23a-27a) and from at least one zone (23-27) a connection route (23d-27d) to a first node (23a-27a) of another zone (23-27) are determined, wherein to determine a zone (23-27), at least one section of its zone boundary (23b-27b) is entered as a virtual obstacle, so that a direct connection between the first node (23a-27a) of the established zone (23-27) and the first node (23a-27a) of another zone (23-27) is interrupted by the entered section of the zone boundary (23b-27b) during the treatment of the determined zone (23-27) because of real and virtual obstacles, and
in the treatment mode, a change of the floor treatment machine (1) from the current zone (23-27) under treatment to another zone (23-27) to be treated is prevented because of real and virtual obstacles and a drive from this current zone (23-27) to the first node (23a-27a) of the other zone (23-27) to be treated is only permitted by canceling the effect of a section of the zone boundary (23b-27b) of the current zone (23-27) entered as a virtual obstacle between the first node (23a-27a) of the two zones (23-27) when an end point having the state "incompletely treated" is no longer present in the current zone (23-27) after passing over this zone (23-27), wherein after reaching the first node (23a-27a) of the other zone (23-27) to be treated, at least one section of the zone boundary (23b-27b) of the other zone (23-27) to be treated is used as a virtual obstacle, so that an exit from the zone (23-27) to be treated is prevented until it is completely treated.

11. The method according to claim 10, **characterized in that** in the planning mode, zones (23-27) spaced apart from one another and/or adjoining one another and/or overlapping are determined, wherein at least a section of its zone boundary (23b-27b), preferably also the entire zone boundary (23b-27b), can be entered as a virtual obstacle for each zone (23-27) and in each case only the virtual obstacles of the presently processed zone (23-27) are active and therefore zone boundaries (23b-27b) of other zones (23-27) can be passed over.

12. The method according to claim 10 or 11, **characterized in that** in the planning mode, a treatment direction, which is specified for the treatment mode in the corresponding zone (23-27), is assigned to each first node (23a-27a) and thus to the zone (23-27) which is associated with the first node (23a-27a).

13. The method according to any one of claims 10 to 12, **characterized in that**, in the treatment mode, the state "completely treated" or "incompletely treated", which is to be assigned to a current end point, is determined by means of the distance from the current end point to the closest starting point on a driving line, which is located in the orientation, which is opposite to the current orientation of the treatment direction, directly next to the driving line comprising the current end point, wherein the state "incompletely treated" is chosen in the case of a distance above a predetermined value.

14. A computer program product, which triggers the execution of a method according to any one of claims 10 to 13 on a program-controlled floor treatment machine (1).

## Revendications

1. Machine de traitement de surface (1) pour le traitement de surfaces de sols, avec un boîtier (2), deux roues motrices (3), au moins une roue-support (4), un dispositif d'entraînement (5), une commande (6), au moins un dispositif de détection d'obstacle et un dispositif de traitement de sol (9), qui permet d'effectuer un traitement de sol dans une zone de traitement avec une position prédéfinie par rapport aux roues (3, 4) ainsi qu'avec une largeur de traitement perpendiculaire au sens de roulement, la commande (6) exécutant un mode de traitement,
le mode de traitement permettant de parcourir une surface à traiter avec la zone de traitement de la machine de traitement de surface (1) par groupes de trajectoires cheminant côte à côte,
une direction de traitement avec une orientation en marche avant et en marche arrière était dirigée perpendiculairement aux segments de trajectoire,
la position et l'alignement de la machine de traitement de surface (1) dans le système de coordonnées du sol étant mis à disposition par un dispositif de détection de la position,
des segments de trajectoire pouvant être parcourus sur les trajectoires de points de début vers des points finaux respectivement dans un sens de roulement,
les sens de roulement étant orientés respectivement en sens opposés sur des trajectoires adjacentes,
les points finaux étant définis de sorte que la poursuite du roulement sur la trajectoire respective ne soit pas possible à cause d'un obstacle détecté par le dispositif de détection d'obstacle,
par rapport aux points finaux, le point de début ainsi que le point final du segment de trajectoire parcouru, au moins un des états « traité intégralement » ou « traité incomplètement » et également au moins une information de sens pour l'état «traité incomplètement» étant enregistrés, l'information de sens indiquant l'orientation du sens de traitement en partant du point final correspondant, dans laquelle il existe des zones traitées incomplètement, et
un déplacement de poursuite de contour aux points finaux étant déclenché pour trouver respectivement de nouveaux points de début, pour lequel la machine de traitement de surface suit l'obstacle jusqu'à ce qu'elle rencontre une trajectoire, le déplacement de poursuite de contour commençant dans le sens de l'orientation respective actuelle du sens de traitement,
un nouveau point de début étant déterminé, lors de la rencontre de la trajectoire parcourue avant le déplacement de la poursuite de contour avec un segment de trajectoire qui n'a pas encore été parcouru selon la mémoire des segments de trajectoire, à cet endroit, et le sens de roulement de cette trajectoire étant sélectionné,
lors de la rencontre d'une trajectoire adjacente sur un segment de trajectoire pas encore parcouru selon la mémoire des segments de trajectoire, un nouveau point de début étant déterminé à cet endroit, et le sens de roulement de cette trajectoire adjacente étant sélectionné,
la fin d'un groupe de segments de trajectoire cheminant côte à côte étant déterminée lors de la rencontre d'une trajectoire et d'un segment de trajectoire déjà parcouru selon la mémoire des segments de trajectoire, la commande (6) recherchant alors dans la mémoire des segments de trajectoire un point final dont l'état correspond à « traité incomplètement » et qu'elle rejoint avec un mouvement de recherche de position, pour traiter à partir de ce point final, selon l'orientation de sens de traitement mémorisée pour ce point final, un nouveau groupe de segments de trajectoire de cheminements adjacents jusqu'à ce qu'il n'existe plus de point final répondant à l'état « traité incomplètement »,
**caractérisée en ce que**
la commande (6) comprend un mode de planification qui permet de définir au moins deux zones (23-27) sur une surface de sol à traiter, un premier nœud (23a-27a) dans chaque zone (23-27) et, à partir d'au moins une zone (23-27), un trajet de liaison (23d-27d) jusqu'à un premier nœud (23a-27a) d'une autre zone, au moins une partie du bord de zone (23b-27b) pouvant être saisie comme obstacle virtuel pour définir une zone (23-27), de sorte qu'une liaison directe entre le premier nœud (23a-27a) de la zone (23-27) définie et le premier nœud (23a-27a) d'une autre zone (23-27) est interrompue par la partie du bord de zone (23b-27b) saisie à cause d'obstacles réels et virtuels, et
dans le mode de traitement, un passage de la machine de traitement de surface (1) d'une zone (23-27) actuelle en cours de traitement à une autre zone (23-27) à traiter est empêché à cause d'obstacles réels et virtuels et le déplacement de cette zone (23-27) actuelle vers le premier nœud (23a-27a) de l'autre zone (23-27) à traiter, en annulant l'action d'une partie du bord de zone (23b-27b) de la zone (23-27) actuelle disposée pour servir d'obstacle virtuel entre le premier nœud (23a-27a) des deux zones (23-27), n'est autorisé que s'il n'y a plus de point final répondant à l'état « incomplètement traité » dans la zone (23-27) actuelle après le passage dans cette zone (23-27), au moins une partie du bord de zone (23b-27b) de l'autre zone (23-27) à traiter étant utilisée comme obstacle virtuel après que le premier nœud (23a-27a) de l'autre zone (23-27) à traiter a été atteint, de sorte que la sortie de la zone (23-27) à traiter est empêchée jusqu'à ce qu'elle ait été complètement traitée.

2. Machine de traitement de surface (1) selon la revendication 1, **caractérisée en ce que** le mode de planification permet de définir aussi bien des zones (23-27) distantes les unes des autres que des zones limitrophes ou se recoupant, au moins une partie du bord de zone (23b-27b) de chaque zone (23-27), de préférence tout le bord de zone (23b-27b), pouvant être saisie comme obstacle virtuel et seuls les obstacles virtuels de la zone en cours de traitement (23-27), étant actifs de sorte que les bords de zone (23b-27b) d'autres zones (23-27) peuvent être franchis.

3. Machine de traitement de surface (1) selon la revendication 1 ou 2, **caractérisée en ce que** le mode de planification permet d'affecter à chaque premier nœud (23a-27a) et ainsi à la zone (23-27) associée au premier nœud (23a-27a) une direction de traitement qui est prédéterminée pour le mode de traitement dans la zone (23-27) correspondante.

4. Machine de traitement de surface (1) selon l'une des revendications 1 à 3, **caractérisée en ce que** dans le mode de traitement, la machine de traitement de surface (1) est déplacée vers le premier nœud (23a-27a) d'une zone (23-27) actuelle quand il n'y a plus de point final dans la zone (23-27) actuelle ayant l'état « incomplètement traité » après le passage dans cette zone (23-27), et le passage de la zone actuelle (23-27) à une autre zone (23-27) est effectué au moyen d'un déplacement de la machine de traitement de surface (1) du premier nœud (23a-27a) de la zone (23-27) actuelle au premier nœud (23a-27a) de l'autre zone (23-27), le dispositif de traitement du sol (9) devant être amené dans un état relevé en vue du déplacement entre ces deux premiers nœuds (23a-27a).

5. Machine de traitement de surface (1) selon la revendication 4, **caractérisée en ce que** le mode de planification permet de définir au moins un autre nœud (28) et son ordre de succession sur le trajet entre deux premiers nœuds (23a-27a) et le mode de traitement permet de passer de la zone (23-27) actuelle à une autre zone (23-27) au moyen d'un déplacement de la machine de traitement de surface (1) passant par l'au moins un autre nœud (28) selon l'ordre de succession de celui-ci.

6. Machine de traitement de surface (1) selon la revendication 5, **caractérisée en ce que** l'au moins un autre nœud (28) peut être placé sur un trajet de passage, de préférence en dehors de toutes les zones (23-27) à traiter, et le mode de traitement permet, le cas échéant, d'obtenir au niveau de cet autre nœud (28) l'ouverture d'une porte ou le déclenchement d'un déplacement avec un ascenseur.

7. Machine de traitement de surface (1) selon l'une des revendications 4 à 6, **caractérisée en ce que** le mode de planification permet d'affecter à un trajet de changement entre deux premiers nœuds (23a-27a) un sens de liaison ou les deux et le mode de traitement permet d'effectuer le trajet de changement en conséquence dans un sens de liaison ou dans les deux.

8. Machine de traitement de surface (1) selon l'une des revendications 1 à 7, **caractérisée en ce que** le mode de traitement permet de déterminer l'état « traité intégralement » ou « traité incomplètement » à affecter au point final actuel à l'aide de la distance du point final actuel au plus proche point de début sur une trajectoire qui est située directement à côté de la trajectoire comportant le point final actuel dans l'orientation opposée à l'orientation actuelle du sens de traitement, l'état « traité incomplètement » étant sélectionné si la distance dépasse une valeur de consigne.

9. Machine de traitement de surface (1) selon l'une des revendications 1 à 8, **caractérisée en ce que** le dispositif de traitement de sol (9) est un dispositif de nettoyage, de préférence avec au moins une brosse (9a), un dispositif d'alimentation en liquide de nettoyage et un dispositif d'aspiration (12), mais si nécessaire avec un aspirateur à poussières, ou un appareil d'injection-extraction ou une balayeuse.

10. Procédé de traitement de surfaces de sols, avec une machine de traitement de surface (1) avec un boîtier (2), deux roues motrices (3), au moins une roue-support (4), un dispositif d'entraînement (5), une commande (6), au moins un dispositif de détection d'obstacle et un dispositif de traitement de sol (9), qui permet d'effectuer un traitement de sol dans une zone de traitement avec une position prédéfinie par rapport aux roues (3, 4) ainsi qu'avec une largeur de traitement perpendiculaire au sens de roulement, dans lequel, dans un mode de traitement, des groupes de segments de trajectoire cheminant côte à côte sont parcourus sur une surface à traiter parcourue avec la zone de traitement de la machine de traitement de surface, et
orientés dans une direction de traitement avec une orientation en marche avant et en marche arrière perpendiculaire aux segments de trajectoire,
la position et l'alignement de la machine de traitement de surface dans le système de coordonnées du sol sont mis à disposition par un dispositif de détection de la position,
des segments de trajectoire sont parcourus sur les trajectoires de points de début vers des points finaux respectivement dans un sens de roulement,
les sens de roulement sont orientés respectivement en sens opposés sur des trajectoires adjacentes,
les points finaux sont définis de sorte que la poursuite du roulement sur la trajectoire respective ne soit pas possible à cause d'un obstacle réel ou virtuel détecté par le dispositif de détection d'obstacle,
par rapport aux points finaux, le point de début ainsi que le point final du segment de trajectoire parcouru, au moins un des états « traité intégralement » ou « traité incomplètement » et également au moins une information de sens pour l'état « traité incomplètement » sont enregistrés, l'information de sens indiquant l'orientation du sens de traitement en partant du point final correspondant dans laquelle il existe des zones traitées incomplètement, et
un déplacement de poursuite de contour aux points finaux est déclenché pour trouver respectivement de nouveaux points de début, pour lequel la machine de traitement de surface suit l'obstacle jusqu'à ce qu'elle rencontre une trajectoire,
le déplacement de poursuite de contour commençant dans le sens de l'orientation respective actuelle du sens de traitement,
lors de la rencontre de la trajectoire parcourue avant le déplacement de poursuite de contour avec un segment de trajectoire qui n'a pas encore été parcouru selon la mémoire des segments de trajectoire, un nouveau point de début étant déterminé à cet endroit, et le sens de roulement de cette trajectoire étant sélectionné,
lors de la rencontre d'une trajectoire adjacente sur un segment de trajectoire pas encore parcouru selon la mémoire des segments de trajectoire, un nouveau point de début étant déterminé à cet endroit, et le sens de roulement de cette trajectoire adjacente étant sélectionné,
la fin d'un groupe de segments de trajectoire cheminant côte à côte étant déterminée lors de la rencontre d'une trajectoire et d'un segment de trajectoire déjà parcouru selon la mémoire des segments de trajectoire, la commande recherchant alors dans la mémoire des segments de trajectoire un point final dont l'état correspond à « traité incomplètement » et qu'elle rejoint avec un mouvement de recherche de position, pour traiter à partir de ce point final, selon l'orientation de sens de traitement mémorisée pour ce point final, un nouveau groupe de segments de trajectoire de cheminements adjacents jusqu'à ce qu'il n'existe plus de point final répondant à l'état « traité incomplètement »,
**caractérisé en ce que**
sont définis, dans un mode de planification, au moins deux zones (23-27) sur une surface de sol à traiter, un premier nœud (23a-27a) dans chaque zone (23-27) et, à partir d'au moins une zone (23-27), un trajet de liaison (23d-27d) jusqu'à un premier nœud (23a-27a) d'une autre zone, au moins une partie du bord de zone (23b-27b) d'une zone (23-27) pouvant être saisie comme obstacle virtuel pour définir celle-ci, de sorte qu'une liaison directe entre le premier nœud (23a-27a) de la zone (23-27) définie et le premier nœud (23a-27a) d'une autre zone (23-27) est interrompue par la partie saisie du bord de zone (23b-27b) à cause d'obstacles réels et virtuels, et
dans le mode de traitement, un passage de la machine de traitement de surface (1) d'une zone (23-27) actuelle en cours de traitement à une autre zone (23-27) à traiter est empêché à cause d'obstacles réels et virtuels et le déplacement de cette zone (23-27) actuelle vers le premier nœud (23a-27a) de l'autre zone (23-27) à traiter, en annulant l'action d'une partie du bord de zone (23b-27b) de la zone (23-27) actuelle disposée pour servir d'obstacle virtuel entre le premier nœud (23a-27a) des deux zones (23-27), n'est autorisé que s'il n'y a plus de point final répondant à l'état « incomplètement traité » dans la zone (23-27) actuelle après le passage dans cette zone (23-27), au moins une partie du bord de zone (23b-27b) de l'autre zone (23-27) à traiter étant utilisée comme obstacle virtuel après que le premier nœud (23a-27a) de l'autre zone (23-27) à traiter a été atteint, de sorte que la sortie de la zone (23-27) à traiter est empêchée jusqu'à ce qu'elle ait été complètement traitée.

11. Procédé selon la revendication 10, **caractérisé en ce que** dans le mode de planification, des zones (23-27) distantes les unes des autres aussi bien que des zones limitrophes ou se recoupant peuvent être définies, au moins une partie du bord de zone (23b-27b) de chaque zone (23-27), de préférence tout le bord de zone (23b-27b), pouvant être saisie comme obstacle virtuel et seuls les obstacles virtuels de la zone en cours de traitement (23-27) étant actifs de sorte que les bords de zone (23b-27b) des autres zones (23-27) peuvent être franchis.

12. Procédé selon la revendication 10 ou 11, **caractérisé en ce que** le mode de planification permet d'affecter à chaque premier nœud (23a-27a) et ainsi à la zone (23-27) associée au premier nœud (23a-27a) une direction de traitement qui est prédéterminée pour le mode de traitement dans la zone (23-27) correspondante.

13. Procédé selon l'une des revendications 10 à 12, **caractérisé en ce que** dans le mode de traitement, l'état « traité intégralement » ou « traité incomplètement » à affecter à un point final actuel est déterminé à l'aide de la distance du point final actuel au plus proche point de début sur une trajectoire qui est située directement à côté de la trajectoire comportant le point final actuel dans l'orientation opposée à l'orientation actuelle du sens de traitement, l'état « traité incomplètement » étant sélectionné si la distance dépasse une valeur de consigne.

14. Produit logiciel pour ordinateur, qui pilote le déroulement d'un procédé selon l'une des revendications 10 à 13 sur une machine de traitement de surface (1) pilotée par logiciel.
